# EUROPEAN PATENT APPLICATION

(11) **EP 4 723 769 A1**
(43) Date of publication of application: **08.04.2026**
(21) Application number: 24850647.9
(22) Date of filing: 28.05.2024
(51) Int. Cl.: H04W 72/02

(54) **RESOURCE SET SELECTION METHOD AND COMMUNICATION APPARATUS**

(30) Priority: 10.08.2023 CN 202311014348
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Goddar, Heinz J.
(86) International application number: PCT/CN2024/095832
(87) International publication number: WO 2025/030995

(57) **Abstract**

Embodiments of this application provide a resource set selection method and a communication apparatus, and relate to the communication field. The method and the apparatus are applicable to a random access process in NR, in which different resource set selection policies can be executed based on different scenarios, thereby facilitating normal implementation of random access in each scenario. The method includes: when a MSG1 transmission count is greater than a first threshold, determining, based on a current MSG1 repetition count, whether to roll back the current MSG1 repetition count; or when the MSG1 transmission count is greater than the first threshold, determining, based on the current MSG1 repetition count and a feature other than the MSG1 repetition count, whether to roll back the current MSG1 repetition count; and when it is determined to roll back the current MSG1 repetition count, selecting a resource set based on the post-rollback MSG1 repetition count and a feature other than the MSG1 repetition count in current random access features.

## Description

This application claims priority to Chinese Patent Application No. 202311014348.1, filed with the China National Intellectual Property Administration on August 10, 2023 and entitled "RESOURCE SET SELECTION METHOD AND COMMUNICATION APPARATUS", which is incorporated herein by reference in its entirety.

### TECHNICAL FIELD

Embodiments of this application relate to the communication field, and in particular, to a resource set selection method and a communication apparatus.

### BACKGROUND

Random access is a necessary process of establishing a radio link between a user equipment (User Equipment, UE) and a network side device in a communication system. The network side device is an access network device, such as a base station. Through the random access, the user equipment may establish the radio link with the network side device.

The random access process includes a process in which the user equipment transmits a MSG1 (message 1, message 1) to the network side device, and the process of transmitting the MSG1 includes a plurality of attempts, that is, repeated transmission of the MSG1. The MSG1 repetition is one of important features in the random access process, and there are various MSG1 repetition counts. When an RSRP (Reference Signal Receiving Power, reference signal receiving power) measured by the user equipment is relatively small, the MSG1 repetition counts are rolled back from a low repetition count to a high repetition count, and a resource set corresponding to the post-rollback MSG1 repetition count is selected, thereby improving a success rate of the random access.

However, in NR (New Radio, new radio), the random access process may further include a MSG3 (message 3, message 3) repetition and another feature other than a MSG1 repetition feature. Therefore, all features of the random access need to be comprehensively considered when the MSG1 repetition count is rolled back, to ensure normal implementation of the random access.

### SUMMARY

Embodiments of this application provide a resource set selection method and a communication apparatus, which are applicable to a random access process in NR, in which different resource set selection policies can be executed based on different scenarios, thereby facilitating normal implementation of random access in each scenario.

To achieve the foregoing objective, the following technical solutions are used in the embodiments of this application.

According to a first aspect, a resource set selection method is provided. The method includes: when a MSG1 transmission count is greater than a first threshold, determining, based on a current MSG1 repetition count, whether to roll back the current MSG1 repetition count; or when the MSG1 transmission count is greater than the first threshold, determining, based on the current MSG1 repetition count and a feature other than the MSG1 repetition count, whether to roll back the current MSG1 repetition count; and when it is determined to roll back the current MSG1 repetition count, selecting a resource set based on the post-rollback MSG1 repetition count and a feature other than the MSG1 repetition count in current random access features.

In a possible implementation, the determining, based on a current MSG1 repetition count, whether to roll back the current MSG1 repetition count includes: when there is a resource set associated with a third feature, determining to roll back a first feature. The first feature is the current MSG1 repetition count, and the third feature is a next repetition count that is higher than the current MSG1 repetition count.

In a possible implementation, the method further includes: when there is no resource set that is associated with the third feature, determining not to perform a rollback.

In a possible implementation, after the determining to roll back a first feature, the method further includes: rolling back the first feature to the third feature.

In a possible implementation, the selecting a resource set based on the post-rollback MSG1 repetition count and a feature other than the MSG1 repetition count in current random access features includes: when there is the first resource set that is associated with both a second feature and the third feature, selecting a first resource set. The second feature is a feature other than a MSG1 repetition count in the current random access features.

In a possible implementation, the method further includes: when there is a resource set that is associated with a subset of the second feature and the third feature, selecting the resource set based on a feature priority.

In a possible implementation, the second feature includes a feature. Selecting the resource set based on the feature priority includes: when the feature priority of the second feature is higher than the feature priority of the third feature, selecting a resource set associated with the second feature; or when the feature priority of the second feature is lower than the feature priority of the third feature, selecting a resource set associated with the third feature.

In a possible implementation, when there is no first resource set, the resource set associated with the third feature is selected.

In a possible implementation, the determining, based on the current MSG1 repetition count and a feature other than the MSG1 repetition count, whether to roll back the current MSG1 repetition count includes: when there is a second resource set that is associated with both the second feature and a subset of the fourth feature, determining to roll back the first feature. The first feature is the current MSG1 repetition count. The second feature is a feature other than the MSG1 repetition count in the current random access features. The fourth feature is a repetition count that is higher than the current MSG1 repetition count in a MSG1 repetition count configured by an access network device.

In a possible implementation, the method further includes: when there is no resource set that is associated with both the second feature and the subset of the fourth feature, determining not to perform a rollback.

In a possible implementation, when there are a plurality of second resource sets, after the determining to roll back the first feature, the method further includes: rolling back the first feature to a fifth feature, where the fifth feature is a feature in the fourth feature. The fifth feature is a MSG1 repetition count with a lowest repetition count in the MSG1 repetition count that is associated with the second resource set.

In a possible implementation, when there is only one second resource set, after the determining to roll back the first feature, the method further includes: rolling back the first feature to a fifth feature, where the fifth feature is a MSG1 repetition count associated with the second resource set.

In a possible implementation, the selecting a resource set based on the post-rollback MSG1 repetition count and a feature other than the MSG1 repetition count in current random access features includes:
selecting a resource set that is associated with both the second feature and the fifth feature.

In a possible implementation, the determining, based on the current MSG1 repetition count and a feature other than the MSG1 repetition count, whether to roll back the current MSG1 repetition count includes: determining, through polling in ascending order of repetition counts in the fourth feature, whether there is a resource set that is associated with both the second feature and a MSG1 repetition count in the fourth feature. The second feature is a feature other than the MSG1 repetition count in the current random access features. The fourth feature is a repetition count that is higher than the current MSG1 repetition count in a MSG1 repetition count configured by an access network device. If there is a resource set that is associated with both the second feature and the MSG1 repetition count in the fourth feature, it is determined to roll back the first feature. The first feature is the current MSG1 repetition count. If there is no resource set that is associated with both the second feature and the MSG1 repetition count in the fourth feature, it is determined not to perform a rollback.

In a possible implementation, the selecting a resource set based on the post-rollback MSG1 repetition count and a feature other than the MSG1 repetition count in current random access features includes: when the polling reaches a fifth feature in the fourth feature, determining that there is exactly a resource set that is associated with the second feature and the fifth feature, and selecting the resource set that is associated with the second feature and the fifth feature. The fifth feature is a MSG1 repetition count with a lowest repetition count in the MSG1 repetition count that is associated with a second resource set.

In a possible implementation, the method further includes: when there is no resource set that is associated with both the second feature and a subset of the fourth feature, and a third resource set selected based on a feature priority is associated with the subset of the fourth feature, determining to roll back the first feature.

In a possible implementation, when there are a plurality of third resource sets, after the determining to roll back the first feature, the method further includes: rolling back the first feature to a sixth feature, where the sixth feature is a feature in the fourth feature. The sixth feature is a MSG1 repetition count with a lowest repetition count in the MSG1 repetition count that is associated with a third resource set.

In a possible implementation, the selecting a resource set based on the post-rollback MSG1 repetition count and a feature other than the MSG1 repetition count in current random access features includes: selecting a resource set associated with the sixth feature in the third resource set.

In a possible implementation, when there is only one third resource set, after the determining to roll back the first feature, the method further includes: rolling back the first feature to the sixth feature, where the sixth feature is a MSG1 repetition count associated with the third resource set.

In a possible implementation, the selecting a resource set based on the post-rollback MSG1 repetition count and a feature other than the MSG1 repetition count in current random access features includes: selecting the third resource set.

In a possible implementation, the method further includes: when there is no resource set that is associated with both the second feature and the subset of the fourth feature, and the resource set selected based on the feature priority is not associated with the subset of the fourth feature, determining not to perform a rollback.

According to a second aspect, a communication apparatus is provided, where the communication apparatus includes a processor and a communication interface, and the processor and the communication interface are configured to support the communication apparatus in performing the method according to any implementation of the first aspect.

According to a third aspect, a computer-readable storage medium is provided. The computer-readable storage medium stores computer instructions and when the computer instructions are run on a computer, the computer is enabled to perform the method according to any implementation of the first aspect.

According to a fourth aspect, a computer program product is provided. The computer program product includes computer instructions, and when the computer instructions are run on a computer, the computer is enabled to perform the method according to any implementation of the first aspect.

### BRIEF DESCRIPTION OF DRAWINGS

FIG. 1 is a schematic flowchart of 4-step random access;
FIG. 2 is a schematic diagram of a communication system according to an embodiment of this application;
FIG. 3 is a schematic flowchart of a resource set selection method according to an embodiment of this application;
FIG. 4 is a schematic flowchart of a method for executing a first policy according to an embodiment of this application;
FIG. 5 is a schematic diagram of a scenario of random access according to an embodiment of this application;
FIG. 6 is a schematic diagram of another scenario of random access according to an embodiment of this application;
FIG. 7 is a schematic flowchart of executing a second policy according to an embodiment of this application;
FIG. 8 is a schematic flowchart of executing a third policy according to an embodiment of this application;
FIG. 9 is a schematic diagram of a scenario of random access according to an embodiment of this application;
FIG. 10 is another schematic flowchart of executing a third policy according to an embodiment of this application;
FIG. 11 is a schematic diagram of a method for implementing a fourth policy according to an embodiment of this application;
FIG. 12 is a schematic diagram of another method for implementing a fourth policy according to an embodiment of this application;
FIG. 13 is a schematic diagram of another scenario of random access according to an embodiment of this application; and
FIG. 14 is a structural diagram of a communication apparatus according to an embodiment of this application.

### DESCRIPTION OF EMBODIMENTS

The terms "first", "second", "third", and the like in the embodiments of this application are used to distinguish between different objects, and are not used to limit a specific sequence. In addition, words such as "example" or "for example" are used to represent giving examples, illustrations, or descriptions. Any embodiment or design solution described as "example" or "for example" in the embodiments of this application should not be explained as being more preferred or having more advantages than other embodiments or design solutions. Exactly, use of the words such as "example" or "for example" is intended to present a related concept in a specific manner.

The following first describes an application scenario of a resource set selection method provided in the embodiments of this application.

In a communication system, a user equipment (User Equipment, UE) initiates random access (Random Access, RA) to a network side device (for example, a base station), to obtain uplink synchronization or to obtain UL grant (uplink grant, uplink grant). The uplink synchronization means that in a same cell, uplink signals sent by user equipments at different locations that use a same timeslot are kept synchronized when arriving at the network side device. The UL grant is used to determine a format of an uplink signal sent by the user equipment, and the signal format may include resource allocation information, a transmission format, and the like.

After the random access is completed, the user equipment obtains the uplink synchronization or the UL grant.

According to different service triggering modes, the random access may be divided into contention based random access (Contention Based Random Access, CBRA) and contention free random access (Contention Free Random Access, CFRA). In the contention based random access, a preamble (Preamble) pool is shared between different user equipments. Therefore, different user equipments may select a same preamble, resulting in a contention relationship between different user equipments. However, in the contention free random access, a preamble is allocated by the network side device to each user equipment. Therefore, there is no contention relationship between different user equipments. Generally, the contention free random access is applicable to scenarios such as a switching process, a process of receiving downlink data in an RRC (Radio Resource Control, radio resource control) connected state, and a positioning process in the RRC connected state. The contention based random access is applicable to scenarios such as an initial RRC connection process and an RRC connection re-establishment process. Because the contention based random access requires time to resolve a contention problem, an access delay is higher than that of the contention free random access.

It should be noted that, the random access in this embodiment of this application may be the foregoing contention based random access, or may be the contention free random access. This is not specifically limited herein.

According to different execution processes, the random access may be divided into 4-step random access (4-step RA) and 2-step random access (2-step RA). It should be understood that the 4-step random access means that a random access process is completed through 4 steps, and the 2-step random access means that a random access process is completed through 2 steps.

It should be noted that, the resource set selection method provided in this embodiment of this application may be applied to the 4-step random access process, or may be applied to the 2-step random access process. This is not specifically limited herein.

The following uses the 4-step random access as an example to describe the random access process.

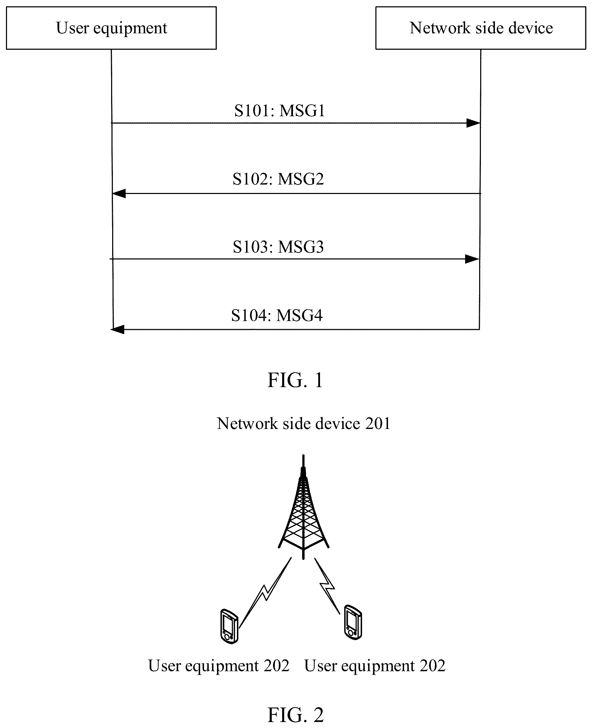

With reference to FIG. 1, FIG. 1 is a schematic flowchart of 4-step random access. As shown in FIG. 1, the process may include the following steps.

S101: A user equipment sends a MSG1 (message 1, message 1) to a network side device.

The MSG1 may include a preamble (preamble), and is used to initiate a random access request to the network side device.

S102: The network side device sends a MSG2 (message 2, message 2) to the user equipment in response to receiving the MSG1.

The MSG2 may also be referred to as a random access response (random access response), and may include scheduling information of a MSG3 (message 3, message 3). Specifically, the MSG2 may be used to indicate how the UE sends the MSG3.

S103: The user equipment sends the MSG3 to the network side device in response to receiving the MSG2.

The MSG3 may carry an RRC connection request (RRC Connection Request), an RRC connection re-establishment request (RRC Connection Re-establishment Request), and the like.

S104: The network side device sends a MSG4 (message 4, message 4) to the user equipment in response to receiving the MSG3.

The MSG4 may include a response message determined by the network side device for the MSG3, and the response message may include related information used for contention resolution between the user equipments.

Through S101-S104, the user equipment can complete the 4-step random access.

The resource set selection method provided in this embodiment of this application may be applied to the foregoing process of S101-S104 or the 2-step random access process. For ease of understanding, the following describes the random access process.

Before the user equipment initiates random access to the network side device, that is, before S101, the user equipment first receives configuration information broadcast by the network side device, and perform initialization based on the configuration information. The configuration information may include information such as SSB ((PSS (Primary Synchronization Signal, primary synchronization signal), an SSS (Secondary Synchronization Signal, secondary synchronization signal), and a PBCH (physical broadcast channel)) information, and the like. The configuration information is used by the user equipment to align with the network side device in terms of a frequency, a time, and the like, and is further used by the user equipment to obtain a parameter and the like required for the random access.

In this embodiment of this application, the configuration information may include a threshold and a plurality of resource sets. The resource sets include available resources in the user equipment and the network side device. The threshold is used by the user equipment to determine a MSG1 repetition count. For example, the threshold may be a link quality threshold, such as an RSRP (Reference Singnal Received Power, reference signal received power) threshold, an RSSI (Received Singnal Strengthen Indicator, received signal strengthen indicator) threshold, and an SINR (Signal to Interference&Noise Ratio, signal to interference&noise ratio) threshold. For ease of description, in the following embodiments, a threshold in the configuration information broadcast by the network side device is referred to as a threshold configured by the network side device, and the threshold is referred to as a link quality threshold. Details are not described again below.

In this application, the configuration information may alternatively be described as a random access configuration (prach-Configuration). The network side device may configure, for the terminal, information about a plurality of (or referred to as a plurality of groups of) resource sets by adding the information to the configuration information, so that the terminal selects a proper resource set from the plurality of resource sets in the configuration information to initiate random access. Optionally, the plurality of groups of resource sets in the same configuration information have a same random access configuration index (prach-ConfigurationIndex).

The foregoing MSG1 repetition count is a feature in the random access process. A process in which the user equipment transmits the MSG1 to the network side device includes a plurality of attempts. The MSG1 repetition count is a count of repeated transmission of the MSG1 in each of the attempts. In NR (New Radio, new radio), the MSG1 repetition count may be 2, 4, 8, or the like. When the MSG1 repetition count is 2, MSG1 repetition 2 may be written. When the MSG1 repetition count is 4, MSG1 repetition 4 may be written. When the MSG1 repetition count is 8, MSG1 repetition 8 may be written.

When the user equipment performs initialization, the user equipment determines an initial MSG1 repetition count based on a relationship between currently measured link quality and a link quality threshold. For example, the MSG1 repetition count includes the MSG1 repetition 2 and the MSG1 repetition 4. The link quality threshold corresponding to the MSG1 repetition 2 is A, and the link quality threshold corresponding to the MSG1 repetition 4 is B. The link quality currently measured by the user equipment is C, where A is greater than B. In this scenario, when C is less than A and is greater than B, the user equipment may determine that an initial MSG1 repetition count is the MSG1 repetition 2. When C is less than B, the user equipment may determine that an initial MSG1 repetition count is the MSG1 repetition 4.

In a process in which the user equipment completes the initialization and performs random access, the user equipment selects, based on the determined initial MSG1 repetition count, a resource set that includes the initial MSG1 repetition count feature, to perform a subsequent random access process.

However, because many user equipments have mobility, and link quality currently measured by the user equipments changes with a change in a location of the user equipment, content about rollback of the MSG1 repetition count is discussed in a technical standard Rel-18 of NR. Specifically, if the link quality currently measured by the user equipment is degraded, and consequently a count that the user equipment transmits the MSG1 (hereinafter referred to as a MSG1 transmission count for short) exceeds a specific threshold but the transmission still fails, the user equipment may roll back the current MSG1 repetition count to a higher MSG1 repetition count, thereby improving a success rate of random access.

For example, the MSG1 repetition count includes MSG1 repetition 2, MSG1 repetition 4, and MSG1 repetition 8, and a current MSG1 repetition count (for example, the foregoing initial MSG1 repetition count) is the MSG1 repetition 2. When the MSG1 transmission count exceeds a specific threshold but the transmission still fails, the user equipment may roll back the MSG1 repetition count from the MSG1 repetition 2 to the MSG1 repetition 4. To be specific, in this embodiment of this application, rollback of the MSG1 repetition count refers to rollback from a low coverage level to a high coverage level, that is, rollback from a low repetition count of the MSG1 repetition count to a high repetition count.

In LTE (Long Term Evolution, 3GPP long term evolution technology), a random access process generally includes only the feature of MSG1 repetition count. Therefore, during rollback of a MSG1 repetition count, if both the user equipment and the network side device support MSG1 repetition count of a next repetition count, the user equipment may directly roll back the MSG1 repetition count to the next repetition count.

However, the random access process in NR may further support another feature such as MSG3 repetition (MSG3 repetition), SDT (Small Data Transmission, small data transmission), or reduced capability (Reduced Capability, RedCap). Therefore, how to design a resource set selection method applicable to the random access process in NR becomes an urgent problem to be resolved.

An embodiment of this application provides a resource set selection method, which is applicable to a random access process in NR.

The resource set selection method provided in this embodiment of this application may be applied to various communication systems. For example, the communication system may be a 3rd generation partnership project (3rd generation partnership project, 3GPP) communication system, a 4th generation (4th generation, 4G) long term evolution (long term evolution, LTE) system, a 5th generation (5th generation, 5G) new radio (new radio, NR) system, a vehicle to everything (vehicle to everything, V2X) system, a system of hybrid networking of LTE and NR, or a device-to-device (device-to-device, D2D) system, a machine to machine (machine to machine, M2M) communication system, an internet of things (Internet of Things, IoT), another next generation communication system, or the like.

The foregoing communication systems to which this application is applicable are only examples for description, and the communication systems to which this application is applicable are not limited thereto. Unified descriptions are provided herein, and details are not described below again.

With reference to FIG. 2, FIG. 2 is a schematic diagram of a communication system according to an embodiment of this application. The communication system includes at least one network side device 201 and at least one user equipment 202.

Optionally, the user equipment 202 and the user equipment 202, and the network side device 201 and the network side device 201 may communicate with each other in a wired or wireless manner. FIG. 2 is merely a schematic diagram. The communication system may further include other network side devices 201, for example, may further include a wireless relay device, a wireless backhaul device, and a core network device, which are not shown in FIG. 2. A quantity of the network side devices 201 and a quantity of the user equipment 202 in FIG. 2 are merely examples. The communication system may include more or fewer network side devices 201 or user equipment 202 than those shown in FIG. 2.

Optionally, the user equipment 202 may be a user side device with a wireless transceiver function. The user equipment 202 may also be referred to as a user equipment (user equipment, UE), a user equipment device, an access user equipment, a subscriber unit, a subscriber station, a mobile station (mobile station, MS), a remote station, a remote user equipment, a mobile terminal (mobile terminal, MT), a user equipment, a wireless communication device, a user agent, a user apparatus, or the like. The user equipment may be, for example, the user equipment in an IoT, a V2X, a D2D, an M2M, a 5G network, or a public land mobile network (public land mobile network, PLMN) in future evolution. The user equipment 202 may be deployed on land, including indoors or outdoors, handheld or vehicle-mounted; or may be deployed on the water (for example, a ship); or may be deployed in the air (for example, an airplane, a balloon, or a satellite).

For example, the user equipment 202 may be an unmanned aerial vehicle, an IoT device (for example, a sensor, an electricity meter, or a water meter), a V2X device, a station (station, ST) in a wireless local area network (wireless local area networks, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, a wearable device (which may also be referred to as a wearable intelligent device), a tablet computer or a computer with a wireless transceiver function, a virtual reality (virtual reality, VR) user equipment 202, a wireless user equipment in industrial control (industrial control), a wireless user equipment in self driving (self driving), a wireless user equipment in remote medical (remote medical), a wireless user equipment in a smart grid (smart grid), a wireless user equipment in transportation safety (transportation safety), a wireless user equipment in a smart city (smart city), a wireless user equipment in a smart home (smart home), a vehicle-mounted user equipment, a vehicle with a vehicle-to-vehicle (vehicle-to-vehicle, V2V) communication capability, an intelligent connected vehicle, an unmanned aerial vehicle with an unmanned aerial vehicle (unmanned aerial vehicle, UAV) to an unmanned aerial vehicle (UAV to UAV, U2U) communication capability, and the like. The user equipment 202 may be movable or stationary. This is not specifically limited in this application.

Optionally, the network side device 201 is a device that connects the user equipment 202 to a wireless network, and may be a next-generation node B (next generation node B, gNodeB or gNB) in a 5G system, or may be a transmission reception point (transmission reception point, TRP), or may be a base station in a future evolved PLMN, or may be a broadband network gateway (broadband network gateway, BNG), an aggregation switch, or a non-3GPP access device, or may be a wireless controller in a cloud radio access network (cloud radio access network, CRAN); or may be an access point (access point, AP) in a WiFi system, or may be a wireless relay node or a wireless backhaul node; or may be a device that implements a base station function in IoT, V2X, D2D, or M2M. This is not specifically limited in this embodiment of this application. For example, the base station in this embodiment of this application may include various forms of base stations, such as a macro base station, a micro base station (also referred to as a small cell), a relay station, and an access point. This is not specifically limited in this embodiment of this application.

In some possible scenarios, the network side device 201 may alternatively be a module or unit that can implement some or all functions of the base station. For example, the network side device 201 may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or CU-CP and CU-UP), the DU, or the RU may alternatively have different names, but a person skilled in the art may understand meanings of these names. For example, the network side device 201 may be a network side device in an open RAN (open RAN, ORAN) system, or a module in the network side device. In the ORAN system, the CU may also be referred to as open (open, O)-CU, the DU may also be referred to as O-DU, the CU-CP may also be referred to as O-CU-CP, the CU-UP may also be referred to as O-CU-UP, and the RU may also be referred to as O-RU. Any unit of the CU (or the CU-CP or the CU-UP), the DU, and the RU in this application may be implemented by using a software module, a hardware module, or a combination of the software module and the hardware module.

It should be noted that, a communication system described in the embodiments of this application is intended to describe the technical solutions in the embodiments of this application more clearly, and does not constitute a limitation on the technical solutions provided in the embodiments of this application. A person of ordinary skill in the art can learn that with evolution of network architectures and emergence of new service scenarios, the technical solutions provided in the embodiments of this application are also applicable to a similar technical problem.

It should be understood that, in the technical solutions of this application, handling such as collection, storage, use, processing, transmission, provision, and disclosure of personal information of the user involved complies with relevant laws and regulations, and does not violate public order and good morals. For example, in the technical solutions of this application, handling of the personal information of the user is performed upon authorization from the user. Unified descriptions are provided herein, and details are not described below again.

It should be noted that, the terms "first", "second", and the like in the specification, claims, and accompanying drawings of this application are used to distinguish between different objects, but are not used to describe a specific sequence. In addition, the terms "include" and "have" and any variations thereof are intended to cover a non-exclusive inclusion. For example, a process, method, system, product, or device that includes a series of steps or units is not limited to the listed steps or units, but optionally further includes an unlisted step or unit, or optionally further includes another step or unit inherent to the process, method, product, or device.

It should be understood that, in this application, "at least one" means one or more, "a plurality of" means two or more, "at least two" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between associated objects. "At least one of the following" or a similar expression thereof refers to any combination of these items, including one item or any combination of a plurality of items. For example, at least one of a, b, or c may represent a, b, c, "a and b", "a and c", "b and c", or "a, b, and c", where a, b, and c may be singular or plural.

It should be understood that, in this embodiment of this application, "B corresponding to A" indicates that B is associated with A. For example, B may be determined based on A. It should be further understood that determining B based on A does not mean determining B based only on A, and B may alternatively be determined based on A and/or other information. In addition, "connected" in the embodiments of this application refers to various connection manners such as a direct connection or an indirect connection, to implement communication between devices. This is not limited in the embodiments of this application.

Unless otherwise specified, the term "transmission" (transmit/transmission) appearing in the embodiments of this application refers to two-way transmission, including transmitting and/or receiving actions. Specifically, "transmission" in the embodiments of this application includes sending data, receiving data, or sending data and receiving data. Alternatively, the data transmission herein includes uplink and/or downlink data transmission. The data may include a channel and/or a signal, the uplink data transmission is uplink channel transmission and/or uplink signal transmission, and the downlink data transmission is downlink channel transmission and/or downlink signal transmission. The terms "network" and "system" appearing in the embodiments of this application express the same concept, and a communication system is a communication network.

Based on the foregoing descriptions of the application scenario and the applicable communication system of this application, the following describes the resource set selection method provided in the embodiments of this application. The resource set selection method provided in this embodiment of this application is applied to a user equipment. The user equipment may store a first threshold and a resource set that are configured by a network side device. In addition, the network side device may initialize a random access process parameter by using a radio resource control (radio resource control, RRC) message. The random access parameter may include but is not limited to one or more of the following:
*numberOfPreamblesPerSSB-ForThisPartition, ssb-SharedRO-MaskIndex;*
*numberOfRA-PreamblesGroupA*

In addition, the resource set selection method in this application may be further applied to a scenario in which a random access preamble is repeatedly transmitted (or referred to as MSG1 repeated sending/transmission), and no contention-free random access resource and no random access resource used for an SI request are provided for a random access process. In other words, when a MSG1 repetition feature exists/is used in the random access process, and no contention-free random access resource and no random access resource used for the SI request are provided for the random access process, the resource set selection method provided in this application is performed.

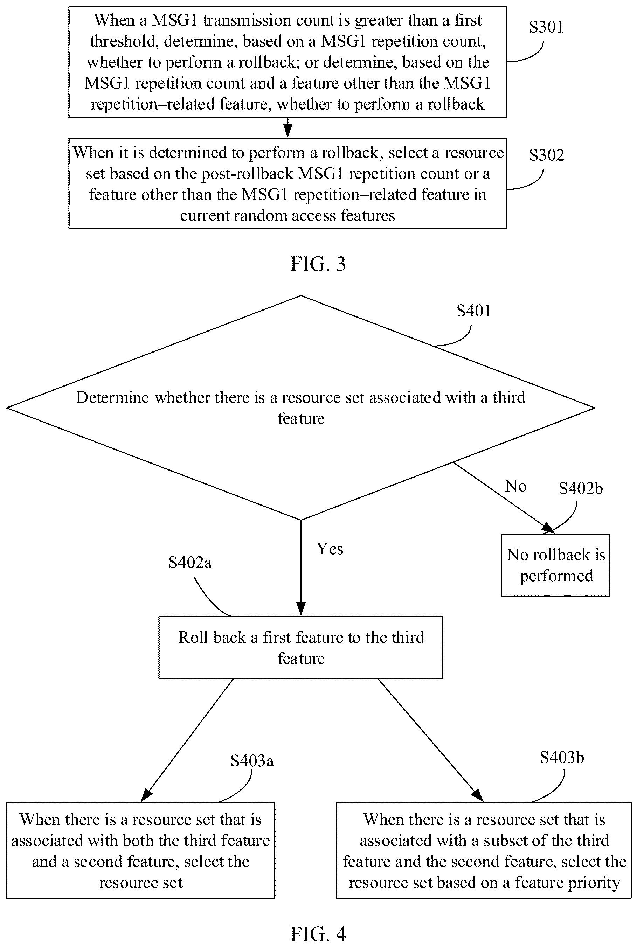

With reference to FIG. 3, FIG. 3 is a schematic flowchart of a resource set selection method according to an embodiment of this application. As shown in FIG. 3, the method may include the following steps.

S301: When a MSG1 transmission count is greater than a first threshold, determine, based on a MSG1 repetition count, whether to perform a rollback; or determine, based on the MSG1 repetition count and a feature other than the MSG1 repetition-related feature, whether to perform a rollback.

In some possible implementations, the MSG1 repetition count may be a current MSG1 repetition count, or a next repetition count that is greater than the current MSG1 repetition count, or a repetition count that is greater than the current MSG1 repetition count. For example, when the MSG1 repetition count is the current MSG1 repetition count, S301 may be described as follows: When a MSG1 transmission count is greater than a first threshold, it is determined, based on a current MSG1 repetition count, whether to roll back the current MSG1 repetition count, or it is determined, based on the current MSG1 repetition count and a feature other than the MSG1 repetition-related feature, whether to roll back the current MSG1 repetition count.

The foregoing solution may alternatively be as follows: When a MSG1 transmission count is greater than a first threshold, it is determined, based on a MSG1 repetition-related feature or a repetition count that is associated with a resource set, whether to perform a rollback; or it is determined, based on the MSG1 repetition-related feature or the repetition count that is associated with the resource set, and a feature other than the MSG1 repetition-related feature, whether to perform a rollback. In this embodiment of this application, the MSG1 repetition-related feature may include MSG1 repetition and/or a MSG1 repetition count. In other words, the MSG1 repetition-related feature may be the MSG1 repetition, or may be the MSG1 repetition count, or may be the MSG1 repetition and MSG1 repetition count.

In this application, a feature other than the MSG1 repetition-related feature may include but is not limited to: a MSG3 repetition-related feature, an SDT (Small Data Transmission, small data transmission), a RedCap (Reduced Capability, reduced capability), a Slice (slice), and the like. The MSG3 repetition-related feature may include MSG1 repetition and/or a MSG3 repetition count, and the feature other than the MSG1 repetition-related feature may be referred to as a non-MSG1 repetition feature.

In this embodiment of this application, rollback refers to: 1) from a low coverage level to a high coverage level, or 2) from a low repetition count of MSG1 repetition to a high repetition count of the MSG1 repetition, or 3) from a current coverage level to a next coverage level, or from a current MSG1 repetition count to a next MSG1 repetition count, where the next MSG1 repetition count refers to a minimum repetition count that is higher than the current MSG1 repetition count, or 4) performing random access related to the high coverage level, or 5) performing random access related to the next coverage level, or 6) performing random access related to the next MSG1 repetition count, or 7) performing random access related to the high MSG1 repetition count (higher than the current MSG1 repetition count). The rollback may alternatively be described as a rollback of the MSG1 repetition count or a rollback of the coverage level.

No rollback means that the current coverage level or MSG1 repetition repetition count is maintained. No rollback may alternatively be described as no rollback of the MSG1 repetition count or no rollback of the coverage level. Details are not described again below.

As mentioned in the foregoing description of the application scenario, the process in which the user equipment transmits the MSG1 to the network side device includes a plurality of attempts, and the MSG1 repetition count is a count of repeated transmission of the MSG1 in each of the attempts. The MSG1 transmission count is a count of transmission of the MSG1 in all attempts corresponding to the current MSG1 repetition count. For example, the current MSG1 repetition count is MSG1 repetition 2, and the process in which the user equipment transmits the MSG1 to the network side device includes 4 attempts. In this case, the MSG1 transmission count corresponding to the MSG1 repetition 2 is 8. The MSG1 repetition count may also be referred to as a PRACH (Physical Random Access Channel, physical random access channel) repetition count.

In some possible implementations, both a current MSG1 repetition count and a feature other than the MSG1 repetition-related feature may be determined by the user equipment based on configuration information sent by the network side device. In an implementation, the current MSG1 repetition count may be determined by the user equipment based on currently measured link quality and a threshold in the configuration information. For a specific determining method, refer to the description in the foregoing embodiments. Details are not described herein again.

In some possible implementations, when the network side device configures a first threshold for the user equipment, only one first threshold may be configured, and the first threshold is applied to all repetition counts of MSG1 repetition. Alternatively, a corresponding first threshold may be configured for each of the repetition counts of MSG1 repetition, and the first threshold is used to configure a maximum preamble transmission count corresponding to each repetition count in a random access process applied to MSG1 repetition.

In this application, the maximum preamble transmission count preambleTransMax-Msg1-Repetition may refer to a maximum attempt count to use a current Msg1 retransmission count before switching to a next available, higher Msg1 retransmission count. In other words, if the device attempts to transmit a preamble by using a specific retransmission count (for example, 4 times), and the preambleTransMax-Msg1-Repetition is set to 3, the device attempts to use this retransmission setting for a maximum of three times. If the retransmission still fails after the three attempts, the device switches to the next available, higher retransmission count (for example, 8 times), and try again.

In this application, the first threshold being used to configure a maximum preamble transmission count means that the maximum preamble transmission count may be obtained through calculation based on the first threshold, or the first threshold is the maximum preamble transmission count.

Because the preamble (preamble) is carried in the MSG1, the maximum preamble transmission count may alternatively be understood or described as a maximum MSG1 transmission count or a maximum MSG1 sending count, and the MSG1 transmission count may alternatively be understood or described as a preamble transmission count or a preamble sending count, PREAMBLE_TRANSMISSION_COUNTER.

Optionally, in an example in which the MSG1 transmission count is PREAMBLE_TRANSMISSION_COUNTER, and the maximum preamble transmission count *ispreambleTransMax,* the MSG1 transmission count being greater than the first threshold may include:

PREAMBLE_TRANSMISSION_COUNTER=[*preambleTransMax-Msg1-Repetition*] + 1; or PREAMBLE_TRANSMISSION_COUNTER=2*[*preambleTransMax-Msg1-Repetition*] *+* 1.

In this application, when the MSG1 transmission count is greater than the first threshold, whether to perform a rollback may be determined in the following manner: The UE obtains candidate MSG1 repetition counts whose MSG1 repetition count is greater than the current MSG1 repetition count.

The candidate MSG1 repetition counts are successively traversed in ascending order of the candidate MSG1 repetition counts, to determine whether there is a resource set that is related to the candidate MSG1 repetition counts; and if there is a resource set that is related to the candidate MSG1 repetition counts, a rollback is performed. The candidate MSG1 repetition count currently traversed is a second MSG1 repetition count, and a rollback to the second MSG1 repetition count is performed.

If there is no resource set that is related to the candidate MSG1 repetition counts, it is determined whether there is a resource set that is related to a next MSG1 repetition count. If there is a resource set that is related to the next MSG1 repetition count, a rollback to the next MSG1 repetition count is performed. If there is no resource set that is related to the next MSG1 repetition count, a candidate MSG1 repetition count following the next candidate MSG1 repetition count is traversed, and the foregoing process is repeated until all candidate MSG1 repetition counts are traversed.

If it is found, upon completion of the traversal, that there is no resource set that is related to any candidate MSG1 repetition count, no rollback is performed.

S302: When it is determined to perform a rollback, select a resource set based on the post-rollback MSG1 repetition count or a feature other than the MSG1 repetition-related feature in current random access features.

It should be noted that the foregoing selecting a resource set means selecting a resource set from the resource set that is configured by the network side device for a user equipment, and details are not described again below.

It should be noted that, the current random access feature in this application may alternatively be described or understood as a feature related to a current set of random access resources, for example, may be a MSG1 repetition count related to the current set of random access resources (the current set of Random Access resources), or a feature or feature combination other than the MSG1 repetition-related feature.

It should be understood that the foregoing procedure of S301-S302 includes two solutions, which are respectively referred to as solution 1 and solution 2. Solution 1 is as follows: When a MSG1 transmission count is greater than a first threshold, it is determined, based on the MSG1 repetition count, whether to perform a rollback; and when it is determined to perform a rollback, a resource set is selected based on the post-rollback MSG1 repetition count or a feature other than the MSG1 repetition-related feature in the current random access features.

Solution 2 is as follows: When a MSG1 transmission count is greater than a first threshold, it is determined, based on the MSG1 repetition count and a feature other than the MSG1 repetition-related feature, whether to perform a rollback; and when it is determined to perform a rollback, a resource set is selected based on the post-rollback MSG1 repetition count and the feature other than the MSG1 repetition-related feature in the current random access features.

For ease of description, in this embodiment of this application, an execution solution after "a MSG1 transmission count is greater than a first threshold" in the procedure shown in FIG. 3 is referred to as a resource set selection policy. Therefore, S301 and S302 may be written as follows: When the MSG1 transmission count is greater than the first threshold, the resource set selection policy is executed.

It should be understood that the resource set selection policy should include a policy for determining whether to roll back the current MSG1 repetition count and a policy for selecting a resource set.

The following describes some resource set selection policies provided in the embodiments of this application.

In some possible implementations, there are one or more resource set selection policies. When a specific selection condition is met and the MSG1 transmission count is greater than the first threshold, the resource set is selected by using a corresponding resource set selection policy. For example, there are a plurality of resource set selection policies, and the network side may configure the resource set selection policy. First, a resource set selection policy related to a feature priority is described.

In the random access process provided in this embodiment of this application, configuration information broadcast by the network side device may include priorities of different random access features. The priority of the random access feature may also be referred to as a feature priority. The feature priority may be used to indicate a priority degree of selecting a resource set that includes a corresponding random access feature. For example, when a resource set is selected, if the current random access features include a feature X and a feature Y, there is no resource set that includes both the feature X and the feature Y among various resource sets, and there are only a resource set that includes only the feature X and a resource set that includes only the feature Y among the various resource sets, and if a priority of the feature X is lower than a priority of the feature Y, the user equipment preferentially selects the resource set that includes the feature Y. If the current random access features include more than two features, a resource set associated with a feature of a highest priority is first searched for. If the resource set is not found, a resource set associated with a feature of a second highest priority is searched for. When one resource is found, the resource is selected. When more than one resource is found, the resource set associated with the second highest priority is found from these resources until one resource set is found or no resource set is found.

The resource set mentioned in this embodiment may be a resource of an associated feature or a set of resources (a set of resources) of the associated feature. The resource set is a random access resource set.

In some possible designs, a priority of the random access feature may be determined by a decoding error rate. Specifically, a higher decoding error rate of the random access feature indicates a higher priority. For example, if a decoding error rate of the feature X is lower than that of the feature Y, a priority of the feature Y may be higher than that of the feature X. In some specific examples, the feature X may be a MSG1 repetition count, and the feature Y may be a MSG3 repetition count. Therefore, a resource set that includes a higher decoding error rate may be preferentially selected when a resource set is selected, to reduce a decoding error rate of the feature, thereby improving a success rate of random access.

It should be noted that, a method for selecting a resource set based on a feature priority is consistent with a method for selecting a resource set based on a feature priority in the 38.321 V17.2.0 version in the conventional technology, including a method for selecting a resource set based on a feature priority in a subsequent evolved version. Details are not described again below.

On this basis, an embodiment of this application provides a resource set selection policy. For ease of description, the resource set selection policy is referred to as a first policy in the following embodiments. It should be understood that, the first policy includes a policy for determining whether to roll back a current MSG1 repetition count and a policy for selecting a resource set.

The policy for determining whether to roll back the current MSG1 repetition count in the first policy may be stated as follows: When there is a resource set associated with a next repetition count that is higher than a current MSG1 repetition count, or when a resource set associated with the next repetition count that is higher than the current MSG1 repetition count is available, the current MSG1 repetition count is rolled back to the next repetition count that is higher than the current MSG1 repetition count. When there is no resource set associated with the next repetition count that is higher than the current MSG1 repetition count, or when the resource set associated with the next repetition count that is higher than the current MSG1 repetition count is unavailable, no rollback is performed.

When it is determined that the current MSG1 repetition count is rolled back to the next repetition count that is higher than the current MSG1 repetition count, the policy for selecting a resource set in the first policy may include two cases, which are respectively referred to as a case 1a and a case 1b. The policy for selecting a resource set in the first policy may be stated as follows:

If it is determined that the current MSG1 repetition count is rolled back to the next repetition count that is higher than the current MSG1 repetition count, the current random access features are the next repetition count that is higher than the current MSG1 repetition count and a feature other than the MSG1 repetition-related feature.

Case 1a: When there is a resource set associated with both the next repetition count that is higher than the current MSG1 repetition count and the feature other than the MSG1 repetition-related feature, or when the resource set associated with both the next repetition count that is higher than the current MSG1 repetition count and the feature other than the MSG1 repetition-related feature is available, the resource set is selected.

To be specific, the case 1a may be understood as follows: When there is a resource set that is related to both the next repetition count that is higher than the current MSG1 repetition count and the feature other than the MSG1 repetition-related feature, the resource set is selected.

Alternatively, the case 1a may be described as follows: If there is a first resource set that has a same index as the current random access resource set, and the first resource set is associated with both the second feature and the third feature, the first resource set is selected. The second feature is a feature or feature combination that is related to the current random access resource set or a feature other than the MSG1 repetition-related feature. The third feature is a next repetition count that is higher than the current MSG1 repetition count.

Case 1b: When there is a resource set that is associated with a subset of the next repetition count that is higher than the current MSG1 repetition count and the feature other than the MSG1 repetition-related feature, or when the resource set associated with the subset of the next repetition count that is higher than the current MSG1 repetition count and the feature other than the MSG1 repetition-related feature is available, the resource set is selected based on a feature priority.

To be specific, the case 1b may be understood as follows: When there is no resource set that is related to both the next repetition count that is higher than the current MSG1 repetition count and the feature other than the MSG1 repetition-related feature, the resource set is selected based on the feature priority.

It should be noted that, in the foregoing subset of the next repetition count that is higher than the current MSG1 repetition count and the feature other than the MSG1 repetition-related feature, an attribute of the subset is the next repetition count that is higher than the current MSG1 repetition count and the feature other than the MSG1 repetition-related feature. In other words, the subset of the next repetition count that is higher than the current MSG1 repetition count and the feature other than the MSG1 repetition-related feature refers to the next repetition count that is higher than the current MSG1 repetition count or the feature other than the MSG1 repetition-related feature.

In an optional implementation, processes of selecting a resource set and determining whether there is a resource set that meets a specific condition and so on in the embodiments of this application all refer to performing selection or determining in a resource set that is configured by the network side device for the user equipment. Details are not described again below.

The next repetition count that is higher than the current MSG1 repetition count in the foregoing statements is described herein. The next repetition count that is higher than the current MSG1 repetition count should meet the following condition: When the configured MSG1 repetition counts are arranged in ascending order or descending order of repetition counts, there is no other MSG1 repetition count between the MSG1 repetition count and the current MSG1 repetition count. For example, the configured MSG1 repetition counts include MS1 repetition 2, MSG1 repetition 4, and MSG1 repetition 8, and the current MSG1 repetition count is MSG1 repetition 2. In this case, a next repetition count that is higher than the current MSG1 repetition count is MSG1 repetition 4. For another example, the configured MSG1 repetition counts include MS1 repetition 2 and MSG1 repetition 8, and the current MSG1 repetition count is MSG1 repetition 2. In this case, a next repetition count that is higher than the current MSG1 repetition count is MSG1 repetition 8.

In this embodiment of this application, for ease of description, the current MSG1 repetition count may be referred to as a first feature, and the next repetition count that is higher than the current MSG1 repetition count may be referred to as a third feature. It should be understood that the first feature may be a MSG1 repetition feature or a repetition count related to MSG1 repetition. In a possible design, both the first feature and the third feature may be MSG1 repetition features, where the first feature and the third feature respectively correspond to different repetition counts, and a repetition count corresponding to the third feature is a next repetition count that is higher than the repetition count corresponding to the first feature. In another possible design, the first feature and the third feature may be different features, and both the first feature and the third feature are repetition count features, where the third feature is a next feature whose repetition count is higher than the repetition count corresponding to the first feature.

In addition, a feature other than the MSG1 repetition count or the MSG1 repetition may alternatively be referred to as a second feature. The second feature is another random access feature other than (the first feature or the feature to which the first feature belongs). The second feature may include one or more random access features, and the second feature may be further defined as another random access feature other than (the first feature or the feature to which the first feature belongs) in a current random access process. For example, the second feature may include but is not limited to features such as SDT, slice, MSG3 repetition, and RedCap.

On this basis, the policy for determining whether to roll back the current MSG1 repetition count in the foregoing first policy may be stated as follows: When there is a resource set associated with the third feature, or when the resource set associated with the third feature is available, a rollback to the third feature is performed. When there is no resource set associated with the third feature, or when the resource set associated with the third feature is unavailable, no rollback is performed.

The policy for selecting a resource set in the first policy may be stated as follows: If it is determined to roll back to the third feature, the current random access features are the third feature and the second feature.

Case 1a: When there is a resource set that is associated with both the third feature and the second feature, or when the resource set associated with both the third feature and the second feature is available, the resource set is selected.

Case 1b: When there is a resource set that is associated with a subset of the third feature and the second feature, or when the resource set that is associated with the subset of the third feature and the second feature is available, the resource set is selected based on a feature priority.

The subset of the third feature and the second feature in this embodiment of this application is a proper subset. Specifically, in the case 1b, the subset of the third feature and the second feature is the third feature or the second feature, excluding the third feature and the second feature.

The following provides a possible implementation of selecting a resource set based on a feature priority by using an example in which the second feature includes only one feature. It should be understood that this is merely an example for description of selecting a resource set based on the feature priority, and does not represent that this application is limited thereto.

If it is determined to roll back to the third feature, the current random access features are the third feature and the second feature. When there is a first resource set that is associated with both the second feature and the third feature, the first resource set is selected. When there is a second resource set that is associated only with the second feature, and there is no resource set that is associated with the third feature, a priority of the second feature is highest, and the second resource set is selected. When there is a third resource set that is associated only with the third feature, and there is no resource associated with the second feature, a priority of the third feature is highest, and the third resource set is selected. When there is the second resource set that is associated with the second feature and the third resource set that is associated with the third feature, a resource set is selected based on priorities of the second feature and the third feature.

If the current random access feature is only the third feature, a resource set associated with the third feature is selected.

In this embodiment of this application, that a resource set is associated with a feature means that the resource set includes a resource corresponding to the feature, or an indication of the feature is configured for the resource set. For example, the resource set associated with the MSG1 repetition 2 includes a resource corresponding to the MSG1 repetition 2 or an indication of MSG1 repetition 2 is configured for the resource set. When the resource set is associated with the feature, the resource set may be used in a random access process to which the feature is applied. If the resource set is not associated with the feature, the resource set may not be used in the random access process to which the feature is applied. In this embodiment of this application, there being a resource set means that a corresponding resource set is available. In addition, in this embodiment of this application, before selecting the resource set, the user equipment needs to determine whether the resource set to be selected is available, and then selects the resource set when the resource set is available. Details are not described again below. A resource set being available means that the resource set includes only a resource set corresponding to the current random access feature. For example, if the current random access features are MSG1 repetition 2 and MSG3 repetition, a resource set that includes MSG1 repetition 4, MSG3 repetition, and SDT is unavailable for the current random access features.

In addition, different MSG1 repetitions such as MSG1 repetition 2 and MSG1 repetition 4 are all used as random access features in the following embodiments. In some possible designs, MSG1 repetition may alternatively be used as the random access feature, and a repetition count of MSG1 repetition may be 2, 4, 8, or the like. Details are not described again below.

In some possible embodiments, a MSG1 repetition-related feature may be described by using a level. For example, in an example in which the MSG1 repetition-related feature is the MSG1 repetition count, it is specified that a lower repetition count corresponding to the MSG1 repetition count indicates a lower level of the MSG1 repetition count. Therefore, the next level of MSG1 repetition count refers to the next MSG1 repetition count, that is, a minimum repetition count that is higher than the current MSG1 repetition count. In this embodiment of this application, the next repetition count that is greater than the current MSG1 repetition count may alternatively be described as the next level of MSG1 repetition count.

The following describes a process of executing the foregoing first policy. It should be understood that the execution process is merely an example, and is used to provide a possible execution process of the first policy. The execution process should not be understood as a limitation on the first policy provided in this embodiment of this application.

With reference to FIG. 4, FIG. 4 is a schematic flowchart of executing a first policy according to an embodiment of this application. As shown in FIG. 4, the process may include the following steps.

S401: Determine whether there is a resource set associated with a third feature. If there is a resource set associated with the third feature, S402a is performed. If there is no resource set associated with the third feature, S402b is performed.

For description of the third feature, refer to the foregoing embodiments. Details are not described herein again.

It should be understood that, if there is no resource set associated with the third feature, even if the first feature is rolled back to the third feature, there is no corresponding resource set when the resource set is selected. Therefore, a rollback may not be performed, that is, S402b is performed: no rollback is performed. When there is a resource set associated with the third feature, the first feature may be rolled back, that is, S402a is performed.

In this application, a plurality of third features may be included, for example, repetition counts whose repetition count is greater than the current MSG1 repetition count may be included. In this case, the third feature may be determined in the following polling manner:

The UE obtains a plurality of third features whose MSG1 repetition count is greater than the current MSG1 repetition count.

The third features are traversed in ascending order of the repetition counts corresponding to the plurality of third features, to determine whether there is a resource set related to the third feature. If there is a resource set related to the third feature, a rollback to the third feature is performed.

If there is no resource set related to the third feature, it is determined whether there is a resource set related to a next third feature. If there is a resource set related to the next third feature, a rollback to the next third feature is performed. If there is no resource set related to the next third feature, a third feature following the next third feature is traversed. The foregoing process is repeatedly performed until all of the plurality of third features are traversed. If it is found, upon completion of the traversal, that there is no resource set related to any one of the third features, no rollback is performed.

S402a: A rollback to the third feature is performed.

It should be understood that a rollback to the third feature being performed may specifically refer to rolling back the current random access feature, that is, the first feature, to the third feature.

Before S402a, the current random access features include the first feature and the second feature. It should be understood that, after S402a, that is, after the first feature is rolled back to the third feature, the current random access features are the second feature and the third feature. For descriptions of the first feature and the second feature, refer to the foregoing embodiments. Details are not described herein again. After S402a is performed, the user equipment may determine, based on the second feature, the third feature, and a relationship between resource sets configured by the network side device, how to select a resource set. For example, the following S403a and S403b are performed.

S403a: When there is a resource set that is associated with both the third feature and the second feature, select the resource set.

It should be understood that there is a resource set that is associated with both the third feature and the second feature, which indicates that the resource set associated with both the third feature and the second feature is available. Details are not described again below.

S403b: When there is a resource set that is associated with a subset of the third feature and the second feature, select a resource set based on a feature priority.

For description of selecting the resource set based on the feature priority, refer to the foregoing embodiments. Details are not described herein again.

It should be noted that FIG. 4 includes a plurality of complete execution procedures. For example, S401 to S402b are one complete execution procedure, S401 to S402a to S403a are one complete execution procedure, and S401 to S402a to S403b are one complete execution procedure. It should be understood that these execution procedures are decoupled. In other words, in this embodiment of this application, only one or more of these execution procedures may be executed, but other execution procedures are not executed. All of these complete execution procedures shall fall within the protection scope of this application.

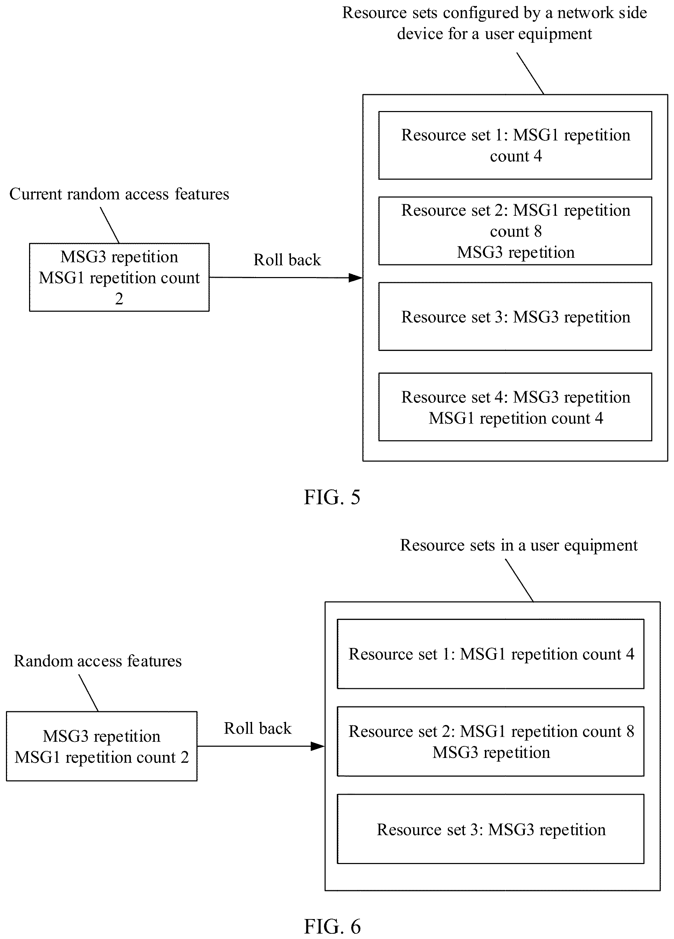

In this way, execution of the foregoing resource set policy is completed. The following describes a process of executing the foregoing first policy by using a scenario shown in FIG. 5 as an example, in which current random access features of user equipments are MSG1 repetition 2 and MSG3 repetition; a configured resource set includes a resource set 1, a resource set 2, a resource set 3, and a resource set 4; the resource set 1 includes a resource of MSG1 repetition 4; the resource set 2 includes resources of MSG1 repetition 8 and MSG3 repetition; the resource set 3 includes a resource of MSG3 repetition; and the resource set 4 includes MSG1 repetition 4 and MSG3 repetition. In this scenario, a priority of a MSG3 repetition count is higher than that of the MSG1 repetition count, and the MSG1 repetition counts supported by the user equipment and a network side device include MSG1 repetition 2, MSG1 repetition 4, and MSG1 repetition 8.

In the foregoing example, the first feature is MSG1 repetition 2, and the second feature is MSG3 repetition. Therefore, a next repetition count (that is, the third feature) that is higher than a current MSG1 repetition count is MSG1 repetition 4.

First, the user equipment may determine, by using S401, that there is a resource set associated with the MSG1 repetition 4, that is, the resource set 1 and the resource set 4. Therefore, the user equipment performs S402a to roll back the MSG1 repetition 2 to the MSG1 repetition 4. In this way, the current random access features are determined to be the MSG1 repetition 4 and the MSG3 repetition.

Then, the user equipment may determine that there is a resource set that is associated with both the MSG1 repetition 4 and the MSG3 repetition, that is, the resource set 4. Therefore, the user equipment may select the resource set 4. This can ensure that another random access feature to which the MSG1 repetition count is rolled back is not discarded.

In some possible designs, if a scenario shown in FIG. 6 is used, that is, the configured resource set includes only the foregoing resource set 1, resource set 2, and resource set 3, the user equipment may determine that there is only the resource set that is associated with a proper subset of the MSG1 repetition 4 and the MSG3 repetition, that is, the resource set 1 and the resource set 3. A priority of a MSG3 repetition count is higher than that of a MSG1 repetition count. Therefore, the user equipment may select the resource set 3 associated with the MSG3 repetition.

In some possible designs, if the configured resource set includes only the foregoing resource set 1 and resource set 2, the user equipment may determine that there is only the resource set 1 that is associated with the MSG1 repetition 4, and there is no resource set that is associated with the MSG3 repetition. In this case, a priority of the MSG1 repetition 4 is higher than that of the MSG3 repetition. Therefore, the user equipment may select the resource set 1 that is associated with the MSG1 repetition 4.

In some other possible designs, if the configured resource set includes only the foregoing resource set 2 and resource set 3, the user equipment may determine that there is only the resource set 3 that is associated with the MSG3 repetition, and there is no resource set that is associated with the MSG1 repetition 4. Therefore, the user equipment may select the resource set 3 associated with the MSG3 repetition.

The first feature is referred to as a feature A, the third feature corresponding to a next level of first feature is referred to as a feature B, and the second feature is referred to as a feature M. The foregoing procedure for executing the first policy is incorporated into the procedure of the resource set selection method shown in FIG. 3. The resource set selection method provided in this embodiment of this application may be stated as follows: When current random access features are the feature A and the feature M, a MSG1 transmission count exceeds a preset first threshold, and there is a resource set that is associated with the next level of feature B of the feature A, it is determined to roll back the feature A to the feature B, and in this case, the current random access features are the feature B and the feature M. On this basis, when there is a resource set that is associated with both the feature M and the feature B, the resource set is selected. When there is a resource set that is associated with a subset of the feature M and the feature B, the resource set is selected based on a feature priority of the feature B and the feature M.

The following further describes a resource set selection policy provided in an embodiment of this application. For ease of description, the resource set selection policy is referred to as a second policy in the following embodiments.

In a random access process, the user equipment being capable of successfully transmitting a MSG1 is a basis for completing random access. Therefore, to improve a success rate of random access, when the user equipment rolls back a MSG1 repetition count, it may be preferentially ensured that the feature of MSG1 repetition count is not discarded, to ensure that the user equipment is capable of successfully transmitting the MSG1. In addition, for a RedCap (reduced capability, reduced capability) user equipment, it should be ensured as far as possible that the MSG1 is recognized by the network side device when the MSG1 is transmitted. Therefore, it should be preferentially ensured that the feature of MSG1 repetition count is not discarded. The RedCap user equipment is a user equipment that meets any one of the following conditions: A bandwidth decreases; a receive antenna is reduced; and a modulation order decreases.

On this basis, a policy for determining whether to perform a rollback in the second policy provided in this embodiment of this application may be as follows: When there is a resource set that is associated with a next repetition count that is higher than a current MSG1 repetition count, or when the resource set that is associated with the next repetition count that is higher than the current MSG1 repetition count is available, a rollback to the next repetition count that is higher than the current MSG1 repetition count is performed. When there is no resource set that is associated with a next repetition count that is higher than the current MSG1 repetition count, or when the resource set associated with the next repetition count that is higher than the current MSG1 repetition count is unavailable, no rollback is performed.

When it is determined to roll back the current MSG1 repetition count to the next repetition count that is higher than the current MSG1 repetition count, the policy for selecting a resource set in the second policy may include two cases, which are respectively referred to as a case 2a and a case 2b. The policy for selecting a resource set in the second policy may be stated as follows:

If it is determined to roll back to the next repetition count that is higher than the current MSG1 repetition count, the current random access features are the next repetition count that is higher than the MSG1 repetition count and a feature other than the MSG1 repetition-related feature.

Case 2a: When there is a resource set that is associated with both the next repetition count that is higher than the MSG1 repetition count and a feature other than the MSG1 repetition-related feature, or the resource set that is associated with both the next repetition count that is higher than the MSG1 repetition count and the feature other than the MSG1 repetition-related feature, the resource set is selected.

Case 2b: When there is no resource set that is associated with both the next repetition count that is higher than the MSG1 repetition count and a feature other than the MSG1 repetition-related feature, or when the resource set that is associated with both the next repetition count that is higher than the MSG1 repetition count and the feature other than the MSG1 repetition-related feature is unavailable, the resource set associated with the next repetition count that is higher than the MSG1 repetition count is selected.

To be specific, the case 2b may be understood as selecting a resource set by preferentially using the MSG1 repetition feature.

It can be learned that a policy for determining whether to roll back a current MSG1 repetition count in the second policy is the same as the policy for determining whether to roll back the current MSG1 repetition count in the first policy. The case 2a in the policy for selecting the resource set in the second policy is the same as the case 1a in the policy for selecting the resource set in the first policy. For related descriptions, refer to descriptions in the foregoing embodiments. Details are not described herein again.

It should be understood that, in the second policy, when there is no resource set that is related to both the current MSG1 repetition count and a feature other than the MSG1 repetition-related feature, a resource set for initiating random access is selected, not based on a feature priority, but a rollback to the next MSG1 repetition count whose repetition count is higher than the current MSG1 repetition count is performed mainly based on the MSG1 repetition, and a random resource is initiated based on a resource related to the next MSG1 repetition count. In other words, this manner is the same as the case that in the first policy, a priority of the MSG1 repetition is set to be higher than that of another feature other than the MSG1 repetition-related feature, in both of which random access is initiated preferentially based on a resource set that is related to a second MSG1 repetition count.

If definitions of the first feature, the second feature, and the third feature in the first policy are used, the policy for determining whether to roll back a current MSG1 repetition count in the second policy may be as follows: When there is a resource set associated with the third feature or when the resource set associated with the third feature is available, the first feature is rolled back to the third feature. When there is no resource set associated with the third feature, or when the resource set associated with the third feature is unavailable, no rollback is performed.

The policy for selecting a resource set in the second policy may be stated as follows: If it is determined to roll back the first feature to the third feature, the current random access features are the third feature and the second feature.

Case 2a: When there is a resource set that is associated with both the third feature and the second feature, or when the resource set that is associated with both the third feature and the second feature is available, the resource set is selected.

Case 2b: When there is no resource set that is associated with both the third feature and the second feature, or when the resource set that is associated with both the third feature and the second feature is unavailable, the resource set associated with the third feature is selected.

It can be learned that, a difference between the second policy and the first policy lies in that, the second policy does not consider the feature priority, but only a resource set associated with a next repetition count that is higher than the current MSG1 repetition count is selected. This can ensure to a maximum extent that the user equipment is capable of successfully transmitting the MSG1, thereby improving a success rate of random access.

The following describes a process of executing the second policy. It should be understood that the execution process is merely an example, and is used to provide a possible execution process of the second policy. The execution process should not be understood as a limitation on the second policy provided in this embodiment of this application.

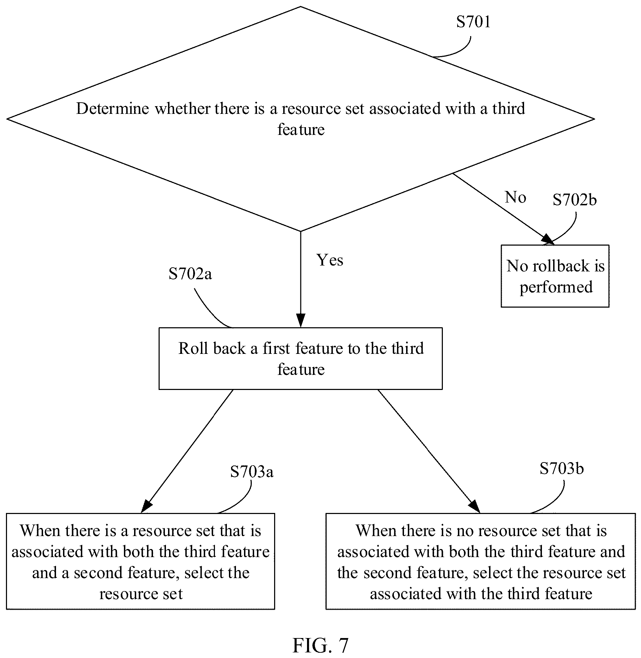

With reference to FIG. 7, FIG. 7 is a schematic flowchart of executing a second policy according to an embodiment of this application. As shown in FIG. 7, the process may include the following steps.

S701: Determine whether there is a resource set associated with a third feature. If there is a resource set associated with the third feature, S702a is performed. If there is no resource set associated with the third feature, S702b is performed.

For description of the third feature, refer to the foregoing embodiments. Details are not described herein again.

It should be understood that, if there is no resource set associated with the third feature, even if the first feature is rolled back to the third feature, there is no corresponding resource set when the resource set is selected, and therefore, a rollback may not be performed. That is, S702b: No rollback is performed.

When there is the resource set associated with the third feature, the first feature may be rolled back. To be specific, the following S702a is performed.

Specifically, for an execution process of S701, refer to the description of S401. Details are not described.

S702a: A rollback to the third feature is performed.

Before S702a, the current random access features include a first feature and a second feature. It should be understood that, after S702a, that is, after the first feature is rolled back to the third feature, the current random access features are the second feature and the third feature. For descriptions of the first feature and the second feature, refer to the foregoing embodiments. Details are not described herein again. After execution of S702a is completed, the user equipment may determine, based on the second feature, the third feature, and a relationship between resource sets configured by the network side device, how to select a resource set. For example, the following S703a and S703b are performed.

S703a: When there is a resource set that is associated with both the third feature and the second feature, select the resource set.

It should be understood that there is a resource set associated with both the third feature and the second feature, which indicates that the resource set associated with both the third feature and the second feature is available, and details are not described again below.

S703b: When there is no resource set that is associated with both the third feature and the second feature, the resource set associated with the third feature is selected.

For description of selecting the resource set based on the feature priority, refer to the foregoing embodiments. Details are not described herein again.

It should be noted that FIG. 7 includes a plurality of complete execution procedures. For example, S701 to S702b are one complete execution procedure, S701 to S702a to S703a are one complete execution procedure, and S701 to S702a to S703b are one complete execution procedure. It should be understood that these execution procedures are decoupled. In other words, in this embodiment of this application, only one or more of these execution procedures may be executed, but other execution procedures are not executed. All of these complete execution procedures shall fall within the protection scope of this application.

In this way, execution of the foregoing resource set policy is completed. The following describes a process of executing the foregoing second policy by using the scenario shown in FIG. 5 as an example, in which a current random access feature of the user equipment is MSG1 repetition 2 and MSG3 repetition; a configured resource set includes a resource set 1, a resource set 2, a resource set 3, and a resource set 4; the resource set 1 includes a resource of MSG1 repetition 4; the resource set 2 includes resources of MSG1 repetition 8 and MSG3 repetition; the resource set 3 includes a resource of MSG3 repetition; the resource set 4 includes MSG1 repetition 4 and MSG3 repetition. In this scenario, MSG1 repetition counts supported by the user equipment and the network side device include MSG1 repetition 2, MSG1 repetition 4, and MSG1 repetition 8.

In the foregoing example, the first feature is MSG1 repetition 2, and the second feature is MSG3 repetition. Therefore, a next repetition count (that is, a third feature) that is higher than a current MSG1 repetition count is MSG1 repetition 4.

First, the user equipment may determine, by using S701, that there is a resource set associated with the MSG1 repetition 4, that is, the resource set 1 and the resource set 4. Therefore, the user equipment performs S702a to roll back the MSG1 repetition 2 to the MSG1 repetition 4. In this way, the current random access features are determined to be the MSG1 repetition 4 and the MSG3 repetition.

Then, the user equipment determines that there is a resource set that is associated with both the MSG1 repetition 4 and the MSG3 repetition, that is, the resource set 4. Therefore, the user equipment may select the resource set 4. This can ensure that another random access feature to which the MSG1 repetition count is rolled back is not discarded.

In some possible designs, if a scenario shown in FIG. 6 is used, that is, the configured resource set includes only the foregoing resource set 1, resource set 2, and resource set 3, the user equipment may determine that there is no resource set associated with both the MSG1 repetition 4 and the MSG3 repetition. Therefore, the user equipment may select a resource set 1 associated with the MSG1 repetition 4.

The first feature is referred to as a feature A, the third feature is referred to as a feature B, and the second feature is referred to as a feature M. The foregoing procedure for executing the second policy is incorporated into the procedure of the resource set selection method shown in FIG. 3. The resource set selection method provided in this embodiment of this application may be stated as follows: When current random access features are the feature A and the feature M, a MSG1 transmission count exceeds a preset first threshold, and there is a resource set that is associated with the feature B, it is determined to roll back to the feature B, and in this case, the current random access features are the feature B and the feature M. On this basis, when there is a resource set associated with both the feature M and the feature B, the resource set is selected. When there is no resource set associated with both the feature M and the feature B, the resource set associated with the feature B is selected.

It should be understood that, in the foregoing first policy, if the priority of the first feature configured by the network side device is higher than the priority of the second feature, an execution result in each scenario is the same as an execution result of the second policy in the corresponding scenario. In other words, the first policy may be configured, by the network side, so that the priority of the first feature is higher than the priority of the second feature, and may achieve a same effect as the second policy.

It should be noted that, although the first policy and the second policy can be applicable to a random access process in which the NR includes a plurality of features, a feature still may be discarded during rollback of the MSG1 repetition count. The following further describes a resource set selection policy provided in an embodiment of this application, in which a repetition count to be rolled back to and a resource set used to initiate random access are selected based on a feature corresponding to an available resource set. The feature corresponding to the available resource set may include whether the feature is related to both a repetition count that is higher than a current MSG1 repetition count and a feature other than the MSG1 repetition-related feature, thereby ensuring that the feature is not discarded when the resource set is selected.

For ease of description, the resource set selection policy is referred to as a third policy in the following embodiments.

The policy for determining whether to perform a rollback in the third policy may be stated as follows:

When there is a resource set associated with both the fourth feature and the second feature, or when the resource set associated with both the fourth feature and the second feature is available, a rollback is performed; otherwise, no rollback is performed.

The foregoing otherwise case is a case in which there is no resource set associated with the fourth feature and the second feature. In this embodiment of this application, the fourth feature may include a full set of the fourth feature and a proper subset of the fourth feature.

In the case of rollback in the third policy, a feature included in the fourth feature may be rolled back to.

The fourth feature is a repetition count that is higher than a current MSG1 repetition count, and the fourth feature is one or more repetition counts. In other words, a repetition count corresponding to the fourth feature is higher than a repetition count corresponding to the first feature, which is another level other than the first feature level (the repetition count corresponding to a fourth feature level is higher than the repetition count corresponding to a first feature level) or a repetition count that is higher than a MSG1 repetition count corresponding to the current first feature. In an implementation, the fourth feature and the first feature may be a same type of feature, and the fourth feature and the first feature are different repetition counts of the feature. In this case, a repetition count corresponding to the fourth feature is higher than a repetition count corresponding to the first feature, and the fourth feature may be a next MSG1 repetition count whose repetition count is higher than the repetition count of the first feature. In an implementation, the first feature and the fourth feature are different MSG1 repetition count features, the first feature is a first MSG1 repetition count feature, and the fourth feature is a repetition count feature that is higher than the first MSG1 repetition count feature. In another implementation, both the first feature and the fourth feature are MSG1 repetition features, and the first feature and the fourth feature correspond to different repetition counts. The first feature is a first MSG1 repetition count, and the fourth feature is a next third MSG1 repetition count that is higher than the first MSG1 repetition count. For example, the MSG1 repetition count includes MS1 repetition 2, MSG1 repetition 4, and MSG1 repetition 8, and the first feature is MSG1 repetition 2. In this case, the fourth feature may be MSG1 repetition 4 and/or MSG1 repetition 8.

It should be further noted that, in this embodiment of this application, the fourth feature may be one or more features, and all repetition counts whose repetition count is greater than the repetition count of the first feature can be traversed. In the foregoing example, that is, when the configured MSG1 repetition counts are MSG1 repetition 2, MSG1 repetition 4, and MSG1 repetition 8, and the current MSG1 repetition count is MSG1 repetition 2, the fourth feature may be MSG1 repetition 4, or may be MSG1 repetition 8, or may alternatively be MSG1 repetition 4 and MSG1 repetition 8.

When the first feature is MSG1 repetition, the policy for determining whether to roll back a current MSG1 repetition count in the foregoing third policy may be described as follows: When there is a resource set associated with both 1) a MSG1 repetition feature that is greater than a current repetition count and 2) another currently selected feature other than the MSG1 repetition feature; or when the resource set associated with both 1) the MSG1 repetition feature that is greater than the current repetition count and 2) the another currently selected feature other than the MSG1 repetition feature is available, a rollback of the MSG1 repetition is performed. Otherwise, no rollback is performed. The otherwise case is that there is no resource set associated with both 1) the MSG1 repetition feature that is greater than a current repetition count and 2) the another currently selected feature other than the MSG1 repetition feature; or the resource set associated with both 1) the MSG1 repetition feature that is greater than a current repetition count and 2) the another currently selected feature other than the MSG1 repetition feature is unavailable.

When the first feature is the first MSG1 repetition count, the policy for determining whether to roll back a current MSG1 repetition count in the foregoing third policy may be described as follows: When there is a resource set associated with both 1) a MSG1 repetition count feature that is greater than a current first MSG1 repetition count and 2) another currently selected feature other than the MSG1 repetition feature; or when the resource set associated with both 1) the MSG1 repetition count feature that is greater than the current first MSG 1 repetition count and 2) the another currently selected feature other than the MSG1 repetition feature is available, a rollback of the MSG1 repetition is performed. Otherwise, no rollback is performed.

After it is determined whether to roll back a current MSG1 repetition count in the third policy, the first feature may be rolled back to a fifth feature. The fifth feature is a repetition count included in the fourth feature. In other words, the fifth feature is a specific repetition count that is higher than the current MSG1 repetition count.

The fifth feature is described herein. For ease of description, the resource set associated with the fourth feature and the second feature is referred to as a second resource set. In some possible implementations, the fifth feature may be any one of the MSG1 repetition counts associated with the second resource set. In some other possible implementations, the fifth feature may be a MSG1 repetition count with a lowest repetition count in the MSG1 repetition counts associated with the second resource set.

On this basis, the policy for selecting a resource set in the third policy may be stated as follows: If it is determined to roll back to the fifth feature, the current random access features are the second feature and the fifth feature, and a resource set associated with both the second feature and the fifth feature is selected. It should be understood that, in the policy for determining whether to roll back the current MSG1 repetition count in the third policy, a rollback is determined to be performed only when there is a resource set associated with the fourth feature and the second feature. The fifth feature is a feature in the fourth feature, and therefore, there is definitely a resource set associated with both the second feature and the fifth feature when a rollback is determined.

The first feature is referred to as a feature A, the second feature is referred to as a feature M, the fourth feature is referred to as a feature X, and the fifth feature is referred to as a feature Y. In the procedure for incorporating the third policy into the resource set selection method shown in FIG. 3, the resource set selection method provided in this embodiment of this application may be stated as follows:

When current random access features are the feature A and the feature M, and a MSG1 transmission count exceeds a preset first threshold, it is determined whether there is a resource set associated with both the feature X and the feature M. If there is a resource set associated with both the feature X and the feature M, the feature A is rolled back to the feature Y, and a resource set associated with both the feature Y and the feature M is selected. If there is no resource set associated with both the feature X and the feature M, no rollback is performed.

The following describes a process of executing the foregoing third policy. It should be understood that the execution process is merely an example, and is used to provide a possible execution process of the third policy. The execution process should not be understood as a limitation on the third policy provided in this embodiment of this application.

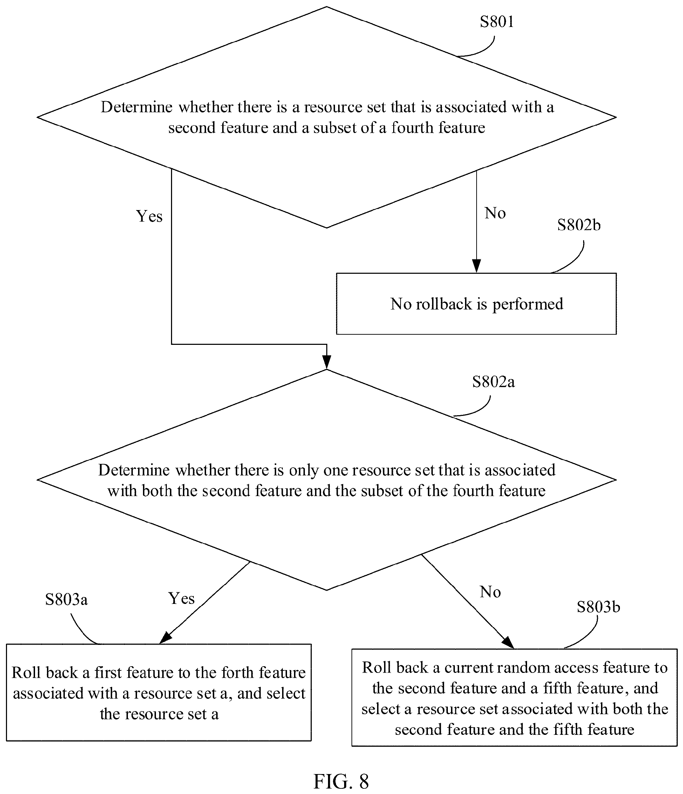

In some possible designs, the execution process of the third policy may include the following steps, as shown in FIG. 8.

S801: Determine whether there is a resource set associated with a fourth feature and a second feature. If there is a resource set associated with the fourth feature and the second feature, S802a is performed. If there is no resource set associated with the fourth feature and the second feature, S802b is performed.

Similar to the description in the foregoing embodiments, S801 may alternatively be described as follows: It is determined whether the resource set associated with the fourth feature and the second feature is available, and details are not described herein again.

It should be understood that, a determining result of S801 being no indicates that there is no resource set associated with both the fourth feature and the second feature, and in this case, no rollback is performed. That is, S802b: No rollback is performed.

A determining result of S801 being yes indicates that there is a resource set associated with both the fourth feature and the second feature. In this case, a subsequent step of selecting a resource set is performed.

S802a: Determine whether there is only one resource set associated with both the fourth feature and the second feature. If there is only one resource set associated with both the fourth feature and the second feature, S803a is performed. If there is not only one resource set associated with both the fourth feature and the second feature, S803b is performed.

In some possible implementations, the fourth feature in this embodiment of this application does not refer to a specific MSG1 repetition count, but generally refers to a repetition count that is higher than a current MSG1 repetition count, or one or more of repetition counts that are higher than the current MSG1 repetition count. For example, the configured MSG1 repetition counts include MS1 repetition 2, MSG1 repetition 4, and MSG1 repetition 8, and the first feature is MSG1 repetition 2. In this case, the fourth feature may be MSG1 repetition 4 and/or MSG1 repetition 8.

If a determining result of S802a is yes, it indicates that there is one and only one resource set associated with both the fourth feature and the second feature, and therefore, the resource set is selected. For ease of description, when there is one and only one resource set associated with both the fourth feature and the second feature, the resource set is referred to as a resource set a. In this case, the user equipment rolls back the first feature to the fourth feature associated with the resource set a, and selects the resource set a, that is, S803a below is performed.

S803a: Roll back to the fourth feature associated with the resource set a, and select the resource set a.

If a determining result of S802a is no, it indicates that there are a plurality of resource sets associated with both the fourth feature and the second feature, and a resource set may be selected by using S803b.

S803b: Roll back the current random access feature to the second feature and the fifth feature, and select a resource set associated with both the second feature and the fifth feature.

The fifth feature is a feature or a repetition count corresponding to a minimum repetition count in the fourth feature associated with the resource set or corresponding to a next repetition count. For description of the fifth feature, refer to the foregoing embodiments. Details are not described herein again.

The first feature, the third feature, the fourth feature, and the fifth feature described above may be a MSG1 repetition feature, a MSG1 repetition count feature, or a MSG1 repetition count.

In conclusion, the third policy corresponding to FIG. 8 may be understood as follows: When a MSG1 transmission count exceeds a first threshold, it is determined whether there is a resource set associated with a MSG1 repetition feature that is greater than a current repetition count and another currently selected feature other than the MSG1 repetition-related feature. a) If there is no such resource set, no rollback is performed. b) If there is such a resource set, it is determined whether there is only one resource set. b.1. When there is only one resource set, a MSG1 repetition count corresponding to the resource set is selected, and a subsequent random access process is performed by using the resource set. b.2. If there are two or more than two resource sets, a next repetition count (that is, a minimum repetition count in optional repetition counts) of a current repetition count is selected, and a corresponding resource set is selected based on the determined repetition count to perform the subsequent random access process.

To be specific, all resource sets associated with another feature higher than the current repetition count and other than the MSG1 repetition-related feature. If there is only one resource set, the resource set is selected. If there are two or more than two resource sets, a resource set associated with the minimum repetition count is selected.

It should be noted that FIG. 8 includes a plurality of complete execution procedures. For example, S801 to S802b are one complete execution procedure, S801 to S802a to S803a are one complete execution procedure, and S801 to S802a to S803b are one complete execution procedure. It should be understood that these execution procedures are decoupled. In other words, in this embodiment of this application, only one or more of these execution procedures may be executed, but other execution procedures are not executed. All of these complete execution procedures shall fall within the protection scope of this application.

The following describes a process of executing the third policy shown in FIG. 8 by using a scenario shown in FIG. 6 as an example, in which current random access features of user equipments are MSG1 repetition 2 and MSG3 repetition, or the random access features are MSG1 repetition and MSG3 repetition; a MSG1 repetition repetition count is 2; configured MSG1 repetition counts include MSG1 repetition 2, MSG1 repetition 4, and MSG1 repetition 8; configured resource sets include a resource set 1, a resource set 2, a resource set 3, and a resource set 4; the resource set 1 includes a resource of MSG1 repetition 4; the resource set 2 includes resources of MSG1 repetition 8 and MSG3 repetition; the resource set 3 includes a resource of MSG3 repetition; and the resource set 4 includes resources of MSG1 repetition 4 and MSG3 repetition.

In the foregoing example, the first feature is MSG1 repetition 2, the second feature is MSG3 repetition, the fourth feature is MSG1 repetition 4 and/or MSG1 repetition 8, and the fifth feature is MSG1 repetition 4.

First, the user equipment may determine, by using S801, that there is the resource set 2 associated with the MSG1 repetition 4 and the MSG3 repetition, and the resource set 4 associated with the MSG1 repetition 8 and the MSG3 repetition, that is, a determining result of S701 is yes, and there are two available resource sets. Therefore, a determining result of S802 is no, and S803b is performed.

Then, the user equipment may roll back the MSG1 repetition 2 to the MSG1 repetition 4 by using S803b, and select the resource set 4 associated with both the MSG1 repetition 4 and the MSG3 repetition, to perform a subsequent random access procedure. In this way, the selected resource set does not cause a feature other than the feature related to the MSG1 repetition count to be discarded, thereby facilitating normal implementation of random access.

In some possible designs, if the configured resource sets include only the resource set 1, the resource set 2, and the resource set 3, an execution result of S802a is yes. In this case, the user equipment rolls back the MSG1 repetition 2 to the MSG1 repetition 8, and selects the resource set 2 to perform a subsequent random access process.

It should be understood that, in the scenario shown in FIG. 6, if the configured resource sets include only the resource set 1 and the resource set 3, the user equipment may determine, by using S801, that there is no resource set associated with both the MSG1 repetition 4 and the MSG3 repetition, and there is no resource set associated with the MSG1 repetition 8 and the MSG3 repetition. Therefore, the user equipment may perform S802b, that is, no rollback is performed.

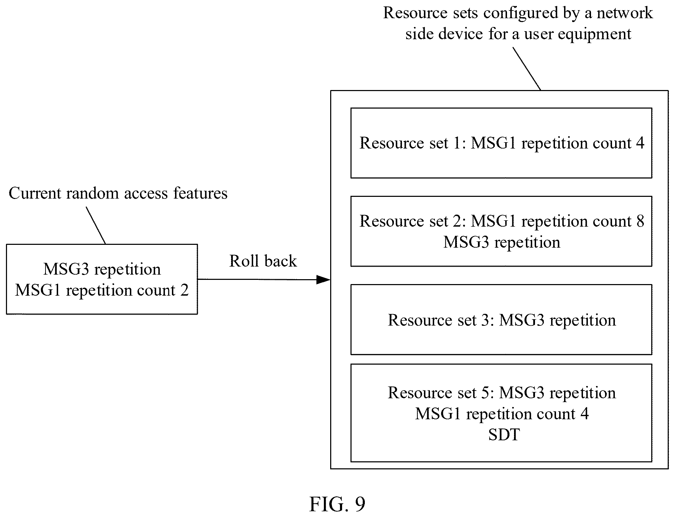

The following further describes a process of executing the third policy shown in FIG. 8 by using a scenario shown in FIG. 9 as an example, in which current random access features of user equipments are MSG1 repetition 2 and MSG3 repetition, or random access features are MSG1 repetition and MSG3 repetition; a MSG1 repetition repetition count is 2; configured MSG1 repetition counts include MSG1 repetition 2, MSG1 repetition 4, and MSG1 repetition 8; configured resource sets include a resource set 1, a resource set 2, a resource set 3, and a resource set 5; the resource set 1 includes a resource of MSG1 repetition 4; the resource set 2 includes resources of MSG1 repetition 8 and MSG3 repetition; the resource set 3 includes a resource of MSG3 repetition; and the resource set 5 includes resources of MSG1 repetition 4, MSG3 repetition, and SDT.

In the foregoing example, the first feature is MSG1 repetition 2, the second feature is MSG3 repetition, the fourth feature is MSG1 repetition 4 and MSG1 repetition 8, and the fifth feature is MSG1 repetition 4.

First, the user equipment may determine, by using S801, that there is the resource set 2 associated with the MSG1 repetition 4 and the MSG3 repetition, that is, a determining result of S701 is yes, and there is one and only one available resource set. Therefore, a determining result of S802a is yes, and S803a is performed.

Then, the user equipment may roll back the MSG1 repetition 2 to the MSG1 repetition 8 by using S803a, and select the resource set 2 to perform a subsequent random access process.

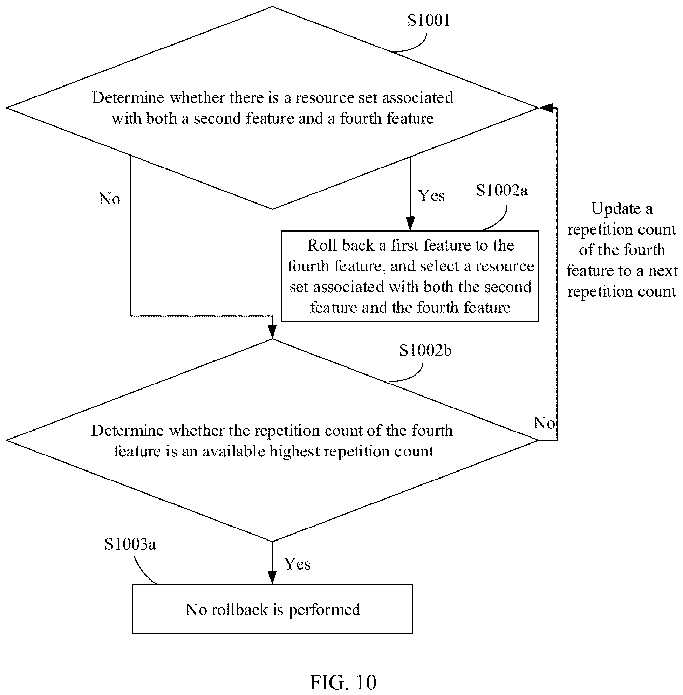

In some possible designs, the third policy may alternatively be executed by using a step shown in FIG. 10. It should be understood that the execution process is merely an example, and is used to provide a possible execution process of the third policy. The execution process should not be understood as a limitation on the third policy provided in this embodiment of this application.

With reference to FIG. 10, FIG. 10 is another schematic flowchart of executing a third policy according to an embodiment of this application. The procedure may include the following steps.

S1001: Determine whether there is a resource set associated with both a second feature and a fourth feature. If there is a resource set associated with both the second feature and the fourth feature, S1002a is performed. If there is no resource set associated with both the second feature and the fourth feature, S1002b is performed.

It should be noted that the foregoing embodiments provide two explanations of the fourth feature. In a first explanation, the fourth feature is explained as a general repetition count that is higher than a current MSG1 repetition count. In a second explanation, the fourth feature is explained as a next MSG1 repetition count whose repetition count is higher than a repetition count of the first feature, that is, is equivalent to the third feature in the foregoing embodiments. In the embodiment corresponding to FIG. 10, the second explanation of the fourth feature is used, that is, the fourth feature is a next MSG1 repetition count whose repetition count is higher than a repetition count of the first feature. In another embodiment, the first explanation of the fourth feature is used.

It should be understood that when the current MSG1 repetition count changes, the fourth feature changes accordingly. For example, the configured MSG1 repetition counts include MSG1 repetition 2, MSG1 repetition 4, and MSG1 repetition 8. When the current MSG1 repetition count is the MSG1 repetition 2, the fourth feature is the MSG1 repetition 4. When the current MSG1 repetition count is the MSG1 repetition 4, the fourth feature is the MSG1 repetition 8.

It should be understood that, a determining result of S1001 being yes indicates that there is a resource set associated with both the second feature and the fourth feature. In this case, a subsequent step of selecting a resource set, that is, S1002a, may be performed.

S1002a: Roll back to the fourth feature, and select the resource set associated with both the second feature and the fourth feature.

In this way, execution of the third policy is completed.

A determining result of S1001 being no indicates that there is no resource set associated with both the second feature and the fourth feature. In this case, the repetition count of the fourth feature may be updated to a next repetition count, and determining continues to be performed by using S1001, that is, S1002b below is performed.

S1002b: Determine whether the repetition count of the fourth feature is an available highest repetition count. If the repetition count of the fourth feature is an available highest repetition count, S1003a is performed. If the repetition count of the fourth feature is not an available highest repetition count, the repetition count of the fourth feature is updated to the next repetition count, and S1001 is performed.

It should be understood that, a determining result of S1002b being yes indicates that there is no resource set associated with the second feature and a feature that is higher than the repetition count of the first feature. Therefore, a rollback may not be performed. That is, S1003a: No rollback is performed.

A determining result of S1002b being no indicates that there is still a feature that is higher than the repetition count of the first feature and that does not go through a determining process of S1001. Therefore, the repetition count of the fourth feature may be updated to a next repetition count, and determining through polling continues to be performed by using S1001.

It should be noted that FIG. 10 includes a plurality of complete execution procedures. For example, S1001 to S1002a are one complete execution procedure, S1001 to S1002b to S1003a are one complete execution procedure, and S1001 to S1002b and cycling to S1001 again are one complete execution procedure. It should be understood that these execution procedures are decoupled. In other words, in this embodiment of this application, only one or more of these execution procedures may be executed, but other execution procedures are not executed. All of these complete execution procedures shall fall within the protection scope of this application.

In summary, the method shown in FIG. 10 is as follows: When it is determined that the MSG1 transmission count exceeds the first threshold, candidate MSG1 repetition counts whose MSG1 repetition count is greater than the current MSG1 repetition count are obtained. The candidate MSG1 repetition counts are traversed in ascending order of the candidate MSG1 repetition counts, and it is determined whether there is a resource set that is related to the candidate MSG1 repetition count, and that is also related to another feature other than the MSG1 repetition-related feature. If there is such a resource set, a rollback to the candidate MSG1 repetition count is performed, and the resource set is selected to initiate random access. If there is no such resource set, a next candidate MSG1 repetition count continues to be polled. The foregoing process is repeatedly performed. If no resource set is determined after the polling ends, no rollback is performed.

To be specific, according to the method shown in FIG. 10, a resource set associated with a minimum repetition count that is higher than the current repetition count and another feature other than the MSG1 repetition-related feature is preferentially found, and the resource set is directly selected.

Whether the repetition count of the fourth feature is an available highest repetition count, and updating the repetition count of the fourth feature to a next repetition count are described herein. For example, the configured MSG1 repetition counts include MSG1 repetition 2, MSG1 repetition 4, and MSG1 repetition 8. If the first feature is the MSG1 repetition 2, when the user equipment performs S1001 for the first time, the fourth feature is the MSG1 repetition 4. After the repetition count of the fourth feature is updated to the next repetition count, the fourth feature is the MSG1 repetition 8. In this case, the repetition count of the fourth feature is 8, which is an available highest repetition count.

The following describes a process of executing the third policy shown in FIG. 10 by using a scenario shown in FIG. 5 as an example, in which current random access features of user equipments are MSG1 repetition 2 and MSG3 repetition, or the random access features are MSG1 repetition and MSG3 repetition; a MSG1 repetition repetition count is 2; configured MSG1 repetition counts include MSG1 repetition 2, MSG1 repetition 4, and MSG1 repetition 8; configured resource sets include a resource set 1, a resource set 2, a resource set 3, and a resource set 4; the resource set 1 includes a resource of MSG1 repetition 4; the resource set 2 includes resources of MSG1 repetition 8 and MSG3 repetition; the resource set 3 includes a resource of MSG3 repetition; and the resource set 4 includes resources of MSG1 repetition 4 and MSG3 repetition.

In the foregoing example, the first feature is the MSG1 repetition 2, the second feature is the MSG3 repetition, and the fourth feature may be the MSG1 repetition 4 when the user equipment performs S1001 for the first time.

First, the user equipment determines, by using S1001, that there is the resource set 4 associated with the MSG1 repetition 4 and the MSG3 repetition, that is, a determining result of S1001 is yes.

Then, the user equipment may roll back the MSG1 repetition 2 to the MSG1 repetition 4 by using S1002a, and select the resource set 4 to perform a subsequent random access process. In this way, the selected resource set does not cause the feature to be discarded, thereby facilitating normal implementation of random access.

It should be understood that, in the scenario shown in FIG. 5, if the configured resource sets include only the resource set 1, the resource set 2, and the resource set 3, the user equipment may determine, by using S1001, that there is no resource set associated with the MSG1 repetition 4 and the MSG3 repetition. Therefore, the user equipment may perform S1002b to determine whether the MSG1 repetition 4 is a MSG1 repetition count with a highest repetition count. Clearly, the MSG1 repetition count with the highest repetition count is the MSG1 repetition 8. Therefore, a determining result of S1002b is no. The user equipment updates the repetition count of the MSG1 repetition 4 to a next repetition count, that is, updates the fourth feature to the MSG1 repetition 8, and performs S1001. The user equipment may determine, by using S1001, that there is a resource set 2 associated with the MSG1 repetition 8 and the MSG3 repetition. Therefore, S1002a may be used to roll back the MSG1 repetition 2 to the MSG1 repetition 8, and select the resource set 2 to perform a subsequent random access process. In this way, the selected resource set does not cause the feature to be discarded, thereby facilitating normal implementation of random access.

The following further describes a process of executing the third policy shown in FIG. 10 by using a scenario shown in FIG. 9 as an example, in which current random access features of user equipments are MSG1 repetition 2 and MSG3 repetition, or random access features are MSG1 repetition and MSG3 repetition; a MSG1 repetition repetition count is 2; configured MSG1 repetition counts include MSG1 repetition 2, MSG1 repetition 4, and MSG1 repetition 8; configured resource sets include a resource set 1, a resource set 2, a resource set 3, and a resource set 5; the resource set 1 includes a resource of MSG1 repetition 4; the resource set 2 includes resources of MSG1 repetition 8 and MSG3 repetition; the resource set 3 includes a resource of MSG3 repetition; and the resource set 5 includes resources of MSG1 repetition 4, MSG3 repetition, and SDT.

In the foregoing example, the first feature is the MSG1 repetition 2, and the second feature is the MSG3 repetition. Therefore, the fourth feature may be MSG1 repetition 4 when the user equipment performs S1001 for the first time

First, the user equipment may determine, by using S1001, that there is no resource set associated with both the MSG1 repetition 4 and the MSG3 repetition, that is, a determining result of S1001 is no.

Then, the user equipment may determine, by using S1002b, that the MSG1 repetition 4 is not a MSG1 repetition count with the highest repetition count. Therefore, the user equipment may update the fourth feature from the MSG1 repetition 4 to the MSG1 repetition 8, and determine, by using S1001, that there is a resource set 2 associated with both the MSG1 repetition 8 and the MSG3 repetition.

Therefore, the user equipment may roll back the MSG1 repetition 2 to the MSG1 repetition 8 by using S1002a, and select the resource set 2 to perform a subsequent random access process. In this way, the selected resource set does not cause the feature to be discarded, thereby facilitating normal implementation of random access.

The following describes how to incorporate an implementation process of the third policy shown in FIG. 10 into a procedure of the resource set selection method shown in FIG. 4, by using an example in which the first feature is a MSG1 repetition A and the second feature is a feature M. In this way, the resource set selection method provided in this embodiment of this application may be stated as follows:

It is determined that a MSG1 transmission count exceeds a preset first threshold, and it is repeatedly determined whether there is a resource set that meets: 1) being associated with a MSG1 repetition feature of a next repetition count (excluding a considered repetition count); 2) being associated with another currently selected feature (that is, the feature M) other than the MSG1 repetition feature. If there is such a resource set, a rollback is performed and the resource is selected. If there is no such resource set, no rollback is performed.

Based on the foregoing description of the third policy, it can be learned that if no corresponding resource set is found in the third policy, no rollback is performed. However, in this scenario, the MSG1 transmission count may exceed the preset threshold, and no rollback being performed may cause a failure to successfully transmit the MSG1, resulting in a failure of a random access process, and a waste of a random access resource. To resolve this problem, an embodiment of this application further provides a resource set selection policy. For ease of description, the resource set selection policy may be referred to as a fourth policy in the following embodiments.

It can be learned from the foregoing description that, in the foregoing third policy, when there is no resource set related to a repetition count that is higher than the current MSG1 repetition count and another currently selected feature other than the MSG1 repetition-related feature, no rollback is performed, and the original current MSG1 repetition count is still retained to initiate random access. To avoid a failure to initiate random access by retaining the original MSG1 repetition count, and ensure a success probability of random access, alternatively, this application further provides the following method: When there is no resource set related to the repetition count that is higher than the current MSG1 repetition count and the another currently selected feature other than the MSG1 repetition-related feature, a resource set associated with a next repetition count is searched for based on a feature priority. This ensures that the MSG1 repetition feature is selected, and further ensures that when the another feature with a lower priority other than the MSG1 repetition-related feature is combined with the MSG1 repetition feature, the MSG1 repetition feature is preferentially selected and the feature with a lower priority is discarded, thereby meeting a priority requirement of a random access feature. Specifically, the method may be the following fourth policy.

A policy for determining whether to perform a rollback in the fourth policy may be stated as follows: When a first condition is met, a rollback is performed.

The first condition may be as follows: 1) when there is a resource set associated with both the fourth feature and the second feature, or when the resource set associated with both the fourth feature and the second feature is available; or 2) when there is a resource set associated with a subset of "the fourth feature and the second feature", or when the resource set associated with the subset of "the fourth feature and the second feature" is available, and the resource set selected based on the feature priority is associated with the fourth feature.

Otherwise, the first condition is not met, and no rollback is performed.

It should be noted that, the resource set associated with the subset of "the fourth feature and the second feature" should be understood as follows: The resource set is associated with the fourth feature, or the resource set is associated with the second feature.

The foregoing otherwise case is a case in which the foregoing first condition is not met.

In the fourth policy, after it is determined, by using 1) in the first condition, to perform a rollback, the first feature may be rolled back to the fourth feature, and a resource set associated with both the second feature and the fourth feature may be selected.

After it is determined, by using 2) in the first condition, to perform a rollback, the first feature may be rolled back to the fourth feature, and the resource set associated with the subset of "the second feature and the fourth feature" may be selected.

A policy for selecting a resource set in the fourth policy may be stated as follows: When it is determined, by using 1) in the first condition, to perform a rollback, the first feature may be rolled back to the fourth feature, and the resource set associated with both the second feature and the fourth feature may be selected. When it is determined, by using 2) in the first condition, to perform a rollback, the first feature is rolled back to the fourth feature, and the resource set associated with both the second feature and the fourth feature is selected.

It can be learned that the third policy and the fourth policy are the same when there is the resource set associated with both the fourth feature and the second feature. Therefore, for an implementation method of this part, reference may be made to the description to the third policy in the foregoing embodiments. A difference lies in that, when there is no resource set associated with both the fourth feature and the second feature, no rollback is performed in the third policy. However, in the fourth policy, it is determined whether the resource set selected based on the feature priority is associated with the fourth feature. If the resource set selected based on the feature priority is associated with the fourth feature, the first feature is rolled back to the fourth feature, and the resource set associated with the fourth feature is selected. If the resource set selected based on the feature priority is not associated with the fourth feature, no rollback is performed.

It should be noted that, a method for selecting a resource set based on a feature priority is consistent with a method for selecting a resource set based on a feature priority in the 38.321 V17.2.0 version in the conventional technology, including a method for selecting a resource set based on a feature priority in a subsequent evolved version. Details are not described again below.

The fourth policy is implemented by using a plurality of methods. The following provides an example for description.

As described above, when there is a resource set associated with both the fourth feature and the second feature, an implementation method for the fourth policy is the same as that for the third policy, and details are not described herein again. The following describes only differences between the fourth policy and the third policy.

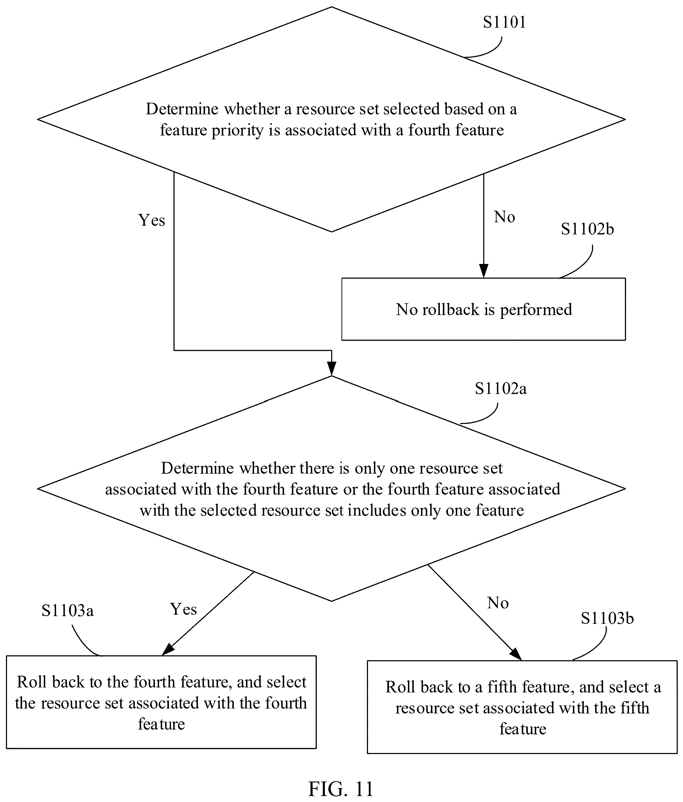

In some possible designs, when there is no resource set associated with both the fourth feature and the second feature, a second rule in the first condition of the fourth policy may include the following steps, as shown in FIG. 11.

S1101: Determine whether a resource set selected based on a feature priority is associated with a fourth feature. If the resource set selected based on the feature priority is associated with the fourth feature, S1102a is performed. If the resource set selected based on the feature priority is not associated with the fourth feature, S1102b is performed.

For a specific description of the fourth feature, refer to the foregoing embodiments. Details are not described herein again.

It should be understood that, a determining result of S1101 being no indicates that the resource set selected based on the feature priority is not associated with the fourth feature. In this case, a rollback may not be performed, that is, S1102b may be: No rollback is performed.

S1102a: Determine whether there is only one resource set associated with the fourth feature or the fourth feature associated with the selected resource set includes only one feature. If there is only one resource set associated with the fourth feature or the fourth feature associated with the selected resource set includes only one feature, S1103a is performed. If there is more than one resource set associated with the fourth feature or the fourth feature associated with the selected resource set includes more than one feature, S1103b is performed.

If yes, it indicates that there is only one resource set associated with the fourth feature. In this case, the user equipment selects the resource set associated with the fourth feature to perform a subsequent random access process. If there is only one feature in the fourth feature, in this case, all selected resource sets are associated with a same feature, and then one resource set is selected from one or more selected resource sets to perform a subsequent random access process.

S1103a: Roll back to the fourth feature, and select the resource set associated with the fourth feature.

If no, it indicates that there are a plurality of resource sets associated with the fourth feature in at least one to-be-selected resource set, and a resource set may be selected by using S1103b.

S1103b: Roll back to a fifth feature, and select a resource set associated with the fifth feature.

It should be noted that, the determining step in S1102a is not mandatory. In some possible implementations, after performing S1101, the user equipment may directly perform S1103a or S1103b based on a result, which is not specifically limited in this application.

For description of the fifth feature, refer to the foregoing embodiments. Details are not described herein again.

In some other possible designs, when there is no resource set associated with both the third feature and the second feature in at least one resource set, an implementation method for the fourth policy may be as follows: It is determined, through polling, whether a to-be-selected resource set selected based on a feature priority is associated with the third feature. When a resource set b selected based on the feature priority is associated with the third feature, the first feature is rolled back to the third feature, and the resource set b is selected. When no resource set is found after the polling ends, no rollback is performed.

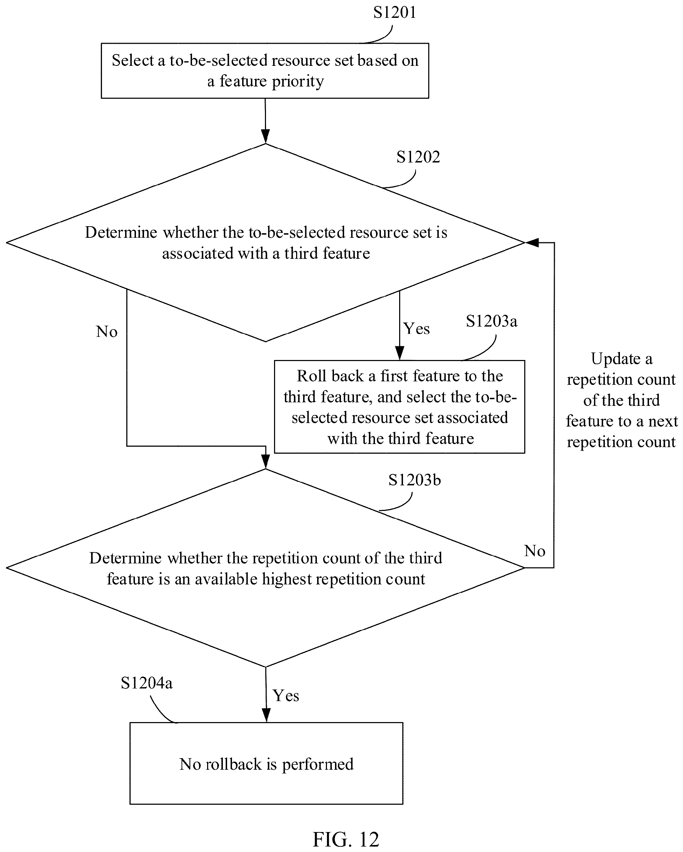

The implementation method may be specifically implemented by using the step shown in FIG. 12. It should be understood that, the implementation method is merely an example, and is used to provide a possible implementation method for the fourth policy. The implementation method should not be understood as a limitation on the fourth policy provided in this embodiment of this application.

S1201: Select a to-be-selected resource set based on a feature priority.

S1202: Determine whether the to-be-selected resource set is associated with the third feature.

If the to-be-selected resource set is associated with the third feature, S1203a is performed.

If the to-be-selected resource set is not associated with the third feature, S1203b is performed.

It should be noted that, when the user equipment performs S1202 for the first time, the third feature is a next repetition count that is higher than a current MSG1 repetition count.

A determining result of S1202 being yes indicates that the to-be-selected resource set is associated with the third feature. In this case, the user equipment may roll back the first feature to the third feature, and select the to-be-selected resource set associated with the third feature. In other words, S1203a may be as follows: The first feature is rolled back to the third feature, and the to-be-selected resource set associated with the third feature is selected.

A determining result of S1202 being no indicates that the to-be-selected resource set is not associated with the third feature. In this case, S1203b below may be performed.

S1203b: Determine whether the repetition count of the third feature is an available highest repetition count. If the repetition count of the third feature is an available highest repetition count, S1204a is performed. If the repetition count of the third feature is not an available highest repetition count, the repetition count of the third feature is updated to a next repetition count, and S1202 is performed.

It should be understood that a determining result of S1203b being yes indicates that all features that are higher than the repetition count of the first feature have gone through the determining process of S1202, and there is no resource set associated with the feature that is higher than the repetition count of the first feature, and therefore, a rollback may not be performed. That is, S1204a: No rollback is performed.

A determining result of S1203b being no indicates that there is still a feature that is higher than the repetition count of the first feature and that does not go through a determining process of S1202. Therefore, the repetition count of the third feature may be updated to a next repetition count, and determining continues to be performed by using S1202.

It should be noted that FIG. 12 includes a plurality of complete execution procedures. For example, S1201 to S1202a are one complete execution procedure, S1201 to S1203b cycling to S1202 again are one complete execution procedure, and S1201 to S1203b to S1203a are one complete execution procedure. It should be understood that these execution procedures are decoupled. In other words, in this embodiment of this application, only one or more of these execution procedures may be executed, but other execution procedures are not executed. All of these complete execution procedures shall fall within the protection scope of this application.

Based on the foregoing description, it can be learned that the implementation method for the fourth policy may be summarized as follows: It is determined that a MSG1 transmission count exceeds a first threshold, and it is repeatedly determined whether a resource set selected by using a method for selecting a resource set based on a feature priority is associated with a next repetition count (excluding the considered MSG1 repetition repetition count). If there is such a resource set, a rollback is performed and the resource is selected. If there is no such resource set, no rollback is performed.

It should be understood that both FIG. 11 and FIG. 12 show implementation methods for some policies in the fourth policy. The following provides an overall description of an implementation method for the fourth policy.

For example, four implementation methods for the fourth policy are provided herein, which are respectively referred to as a first implementation method, a second implementation method, a third implementation method, and a fourth implementation method.

The first implementation method is first described. The first implementation method may be stated as follows:
It is determined that a MSG1 transmission count exceeds a first threshold, and it is determined whether there is a resource set that is associated with: 1) a MSG1 repetition feature that is greater than a current repetition count; and 2) another currently selected feature other than the MSG1 repetition feature.
A. When there is such a resource set, it is determined whether there is only one resource.
   a1. If there is only one resource set, a MSG1 repetition repetition count corresponding to the resource is selected, and a subsequent random access process is performed by using the resource.
   a2. If there are at least two resources, a next repetition count of the current repetition count is selected (that is, a minimum repetition count in optional repetition counts), and a corresponding resource is selected based on the determined repetition count to perform a subsequent random access process.
B. When there is no such resource set, it is determined whether a resource set selected by using a method for selecting a resource set based on a feature priority is associated with a repetition count that is higher than the current repetition count.
   b1. If no, no rollback is performed.
   b2. If yes, it is determined whether there is only one resource.
   b2a. When there is only one resource, a MSG1 repetition repetition count corresponding to the resource is selected, and a subsequent random access process is performed by using the resource.
   b2b. When there are at least two resources, a next repetition count of the current repetition count (that is, a minimum repetition count in optional repetition counts) is selected, and a corresponding resource is selected based on the determined repetition count to perform a subsequent random access process.

The following describes the second implementation method. The second implementation method may be stated as follows:

It is repeatedly determined whether there is a resource set that is associated with a MSG1 repetition feature of a next repetition count and another currently selected feature other than the MSG1 repetition feature. The determining excludes the considered MSG1 repetition repetition count.
A. If at least one resource can be identified, the resource is selected.
B. If there is no such resource set, and all available MSG1 repetition repetition counts have been polled, a resource set is selected based on the feature priority, and it is repeatedly determined whether the resource set selected by using the method for selecting a resource set based on the feature priority is associated with a next repetition count. The determining excludes the considered MSG1 repetition repetition count.
   b1. If at least one resource can be identified, the resource is selected.
   b2. If there is no resource set and all available MSG1 repetition repetition counts have been polled, no rollback is performed.

It can be learned that, if the current MSG1 repetition count is MSG1 repetition A and a second feature is M, the first implementation method and the second implementation method are as follows: First, it is determined whether all resource sets are associated with the features: a repetition count higher than the repetition count A; and M. If all resource sets are associated with the features, a rollback is performed and the resource is selected. In this process, all resource sets are traversed and then selection is performed. If no resource set is found by using the foregoing traversal method, it is determined whether the resource set selected based on the feature priority is associated with the repetition count higher than the repetition count A. If yes, a rollback is performed and the resource is selected. If no, no rollback is performed.

The following describes the third implementation method. The third implementation method may be stated as follows:
It is determined that a MSG1 transmission count exceeds a first threshold, and it is determined whether there is a resource that meets: 1) a MSG1 repetition feature greater than a current repetition count; and 2) another currently selected feature other than the MSG1 repetition feature.
A. When there is such a resource, it is determined whether there is only one resource.
   a1. If there is only one resource, a MSG1 repetition repetition count corresponding to the resource is selected, and a subsequent random access process is performed by using the resource.
   a2. If there are at least two resources, a next repetition count of the current repetition count is selected (that is, a minimum repetition count in optional repetition counts), and a corresponding resource is selected based on the determined repetition count to perform a subsequent random access process.
B. When there is no such resource, it is determined whether a resource set selected by using a method for selecting a resource set based on a feature priority is associated with a repetition count that is higher than the current repetition count.
   b1. When the selected resource set is not associated with the repetition count that is higher than the current repetition count, and resource sets of all available MSG1 repetition repetition counts have been polled, no rollback is performed.
   b2. When the selected resource set is associated with the repetition count that is higher than the current repetition count, it is determined whether there is only one resource. When there is only one resource, a MSG1 repetition repetition count corresponding to the resource is selected, and a subsequent random access process is performed by using the resource. If there are at least two resources, a next repetition count of the current repetition count is selected (that is, a minimum repetition count in optional repetition counts), and a corresponding resource is selected based on the determined repetition count to perform a subsequent random access process.

The following describes the fourth implementation method. The fourth implementation method may be stated as follows:
It is determined that a MSG1 transmission count exceeds a first threshold, and it is determined whether there is a resource set that is associated with a MSG1 repetition feature of a next repetition count and another currently selected feature other than the MSG1 repetition feature. The determining excludes the considered MSG1 repetition repetition count.
A. If at least one resource can be identified, a repetition count corresponding to the resource is selected, and the resource is selected to perform a random access process.
B. If there is no such resource set, a resource set is selected based on the feature priority, and it is determined whether the resource set selected by using the method for selecting a resource set based on the feature priority is associated with a next repetition count. The determining excludes the considered MSG1 repetition repetition count.
   b1. If there is at least one resource, the resource is selected.
   b2. If there is no such resource set, and resource sets of all available MSG1 repetition repetition counts have been polled, no rollback is performed. It can be learned that, if the current MSG1 repetition count is MSG1 repetition A and a second feature is M, the third implementation method and the fourth implementation method are as follows: First, it is determined whether the resource set is associated with the features: a next repetition count higher than the repetition count A; and M. If the resource set is associated with the features, a rollback is performed and the resource is selected. If the resource set is not associated with the features, it is determined whether the resource set selected based on the feature priority is associated with the next repetition count higher than the repetition count A. If yes, a rollback is performed and the resource is selected. If no, and the resource set is traversed by using the foregoing method, no rollback is performed. It should be noted that, because execution steps of the first implementation method and the third implementation method, the first implementation method and the fourth implementation method, the second implementation method and the third implementation method, and the second implementation method and the fourth implementation method are different, a resource set finally selected may vary. The following uses the first implementation method and the fourth implementation method as an example for description.

In this example, configured resource sets include a resource set 7 and a resource set 8. The resource set 7 includes a resource of MSG1 repetition 4 and a resource of MSG3 repetition. The resource set 8 includes a resource of MSG1 repetition 8 and a resource of the MSG3 repetition. Current random access features are MSG1 repetition 2, MSG3 repetition, and SDT, or current random access features are MSG1 repetition, MSG3 repetition, and SDT, where a MSG1 repetition repetition count is 2, and a feature priority associated with the resource set 7 is higher than a feature priority associated with the resource set 8.

According to the first implementation, because there is only the resource set 8 that is associated with the MSG1 repetition 8 and the MSG3 repetition and the SDT, the resource set 8 may be directly selected during determining in the first step.

According to the fourth implementation, first, it is determined whether there is a resource set associated with the MSG1 repetition 4, the MSG3 repetition, and the SDT. If a determining result is no, the resource set 7 is selected based on a feature priority. The resource set 7 is related to the MSG1 repetition 4, and in this case, the resource set 7 is selected for the fourth implementation.

Some resource set selection policies provided in the embodiments of this application are described above. It should be noted that the foregoing first policy, second policy, third policy, and fourth policy may be cross-combined to form more new resource set selection policies. These new resource set selection policies shall also fall within the protection scope of the resource set selection method provided in the embodiments of this application.

The following further describes different resource set selection policies by using a specific example.

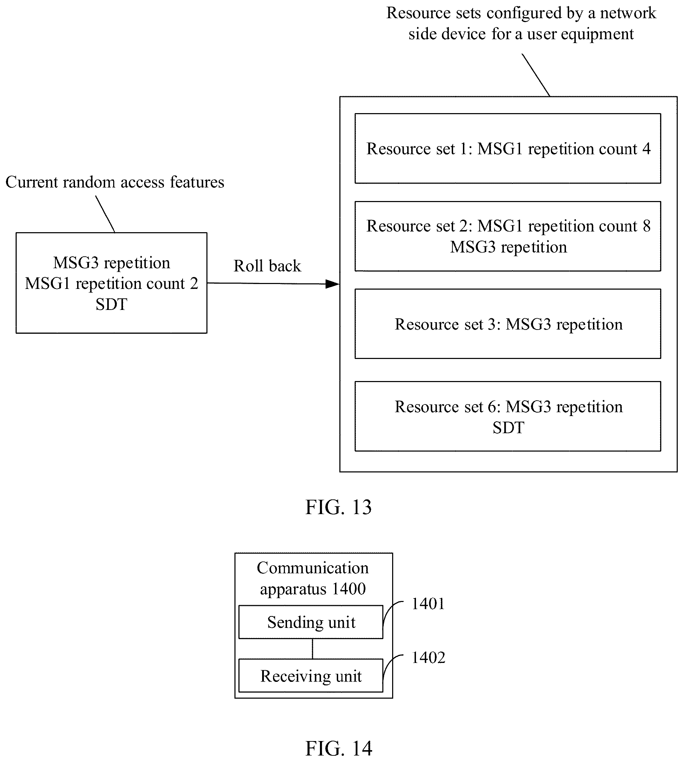

With reference to FIG. 13, FIG. 13 is a schematic diagram of another scenario of random access according to an embodiment of this application. As shown in FIG. 13, in this example, current random access features are MSG1 repetition 2, MSG3 repetition, and SDT. Configured resource sets include a resource set 1, a resource set 2, a resource set 3, and a resource set 6. The resource set 1 includes a resource of the MSG1 repetition 4, the resource set 2 includes resources of the MSG1 repetition 8 and the MSG3 repetition, the resource set 3 includes a resource of the MSG3 repetition, and the resource set 6 includes resources of the SDT and the MSG3 repetition. The MSG3 repetition, the MSG1 repetition, and the SDT are arranged in descending order of feature priorities.

A process in which the user equipment selects a resource set in the scenario shown in FIG. 13 by using a first policy. First, the user equipment determines that there is the resource set 1 associated with the MSG1 repetition 4. Therefore, the MSG1 repetition 2 may be rolled back to the MSG1 repetition 4, the MSG3 repetition, and the SDT. Then, the user equipment determines that there are both the resource set 1 associated with the MSG1 repetition 4 and the resource set 3 associated with the MSG1 repetition. In this case, based on the fact that a priority of the MSG3 repetition is higher than that of the MSG1 repetition, the user equipment may select the resource set 3 to perform a subsequent random access process. Therefore, after selecting a resource set in the scenario shown in FIG. 13 by using the first policy, the user equipment does not perform MSG1 repetition.

A process in which the user equipment selects a resource set in the scenario shown in FIG. 13 by using a second policy. First, the user equipment determines that there is the resource set 1 associated with the MSG1 repetition 4. Therefore, the MSG1 repetition 2 may be rolled back to the MSG1 repetition 4, the MSG3 repetition, and the SDT. Then, the user equipment determines that there is no resource set associated with both the MSG1 repetition 4 and the MSG1 repetition, and in this case, the resource set 1 associated with the MSG1 repetition 4 is selected to perform a subsequent random access process. Therefore, after selecting a resource set in the scenario shown in FIG. 13 by using the second policy, the user equipment discards the MSG3 repetition feature.

A process in which the user equipment selects a resource set in the scenario shown in FIG. 13 by using a third policy is described herein. The user equipment cannot find, by using the third policy, a resource set that is associated with the MSG1 repetition 4, the MSG3 repetition, and the SDT, and therefore no rollback is performed.

A process of determining a resource set in the scenario shown in FIG. 13 by using a fourth policy is described herein. First, the user equipment may determine that there is no resource set associated with MSG1 repetition 2, MSG3 repetition, and SDT. Then, the user equipment may determine that the resource set 3 selected based on the feature priority is not associated with a repetition count (that is, MSG1 repetition 4) higher than a current MSG1 repetition count, and the resource set 2 selected based on the feature priority is associated with the repetition count (that is, the MSG1 repetition 4) higher than the current MSG1 repetition count. Therefore, the user equipment may roll back the MSG1 repetition 2 to the MGS1 repetition 8, and select the resource set 2.

For example, the first feature is MSG1 repetition A, and the second feature is the feature M. It can be learned from the foregoing description that, during determining of the post-rollback MSG1 repetition count, according to the first policy, when there is a resource set associated with a repetition count greater than A (a next repetition count), a rollback to a minimum repetition count is performed. According to the second policy, when there is a resource set associated with both a repetition count greater than A and the feature M, a corresponding minimum repetition count in the resource set is selected. According to the third policy, when there is no resource set associated with both the repetition count greater than A and the feature M, but there is a resource set associated with the repetition count greater than A, a corresponding minimum repetition count in the resource set is selected. According to the fourth policy, when there is no resource set associated with both the repetition count greater than A and the feature M, and the resource set selected based on the feature priority is associated with the repetition count greater than A, a corresponding minimum repetition count in the resource set is selected.

To be specific, the method provided in this application includes: When a MSG1 transmission count is greater than a first threshold, it is determined, based on MSG1 repetition, whether to roll back a current MSG1 repetition count; or when the MSG1 transmission count is greater than the first threshold, it is determined, based on the MSG1 repetition and a feature other than the MSG1 repetition, whether to roll back the current MSG1 repetition count; and when it is determined to roll back the current MSG1 repetition count, a random access resource is selected based on the post-rollback MSG1 repetition count and a feature other than the MSG1 repetition in current random access features.

In a possible implementation, the MSG1 includes a random access preamble, and the rollback includes at least one of the following:
from a low coverage level to a high coverage level;
from a low MSG1 repetition count to a high MSG1 repetition count;
from the current MSG1 repetition count to a next MSG1 repetition count, where the next MSG1 repetition count is a minimum repetition count that is higher than the current MSG1 repetition count;
performing random access related to the high coverage level;
performing random access related to a next coverage level;
performing random access related to the next MSG1 repetition count; and
performing random access related to the high MSG1 repetition count, where the high MSG1 repetition count is a MSG1 repetition count that is higher than the current MSG1 repetition count.

In a possible implementation, the first threshold corresponds to the MSG1 repetition count, and the first threshold is used to configure a maximum preamble transmission count that corresponds to the MSG1 repetition count.

In a possible implementation, the maximum preamble transmission count is a maximum preamble transmission count for the current Msg1 retransmission count before switching to a next available, high MSG1 retransmission count.

In a possible implementation, the determining, based on MSG1 repetition, whether to roll back a current MSG1 repetition count includes:
if there is a random access resource related to a MSG1 repetition count that is higher than the current MSG1 repetition count, determining to roll back the current MSG1 repetition count.

In a possible implementation, the selecting a random access resource based on the post-rollback MSG1 repetition count and a feature other than the MSG1 repetition in current random access features includes:
if there is a random access resource that has a same feature or feature combination as the current random access resource, and the random access resource is a random access resource related to a next MSG1 repetition count that is higher than the current MSG1 repetition count, selecting the random access resource.

In a possible implementation, the selecting a random access resource based on the post-rollback MSG1 repetition count and a feature other than the MSG1 repetition in current random access features includes:
if there is a random access resource that has a same feature or a same subset of a feature combination as the current random access resource, selecting a random access resource based on a feature priority, where
the same feature or the same subset of the feature combination includes the MSG1 repetition or a feature other than the MSG1 repetition.

In a possible implementation, the selecting a random access resource based on the post-rollback MSG1 repetition count and a feature other than the MSG1 repetition in current random access features includes:
if there is no random access resource that has a same feature or feature combination as the current random access resource, selecting a random access resource related to a next MSG1 repetition count that is higher than the current MSG1 repetition count.

In a possible implementation, the determining, based on the MSG1 repetition and a feature other than the MSG1 repetition, whether to roll back the current MSG1 repetition count includes:
if there is a first random access resource that has a same feature or feature combination as the current random access resource, and the first random access resource is associated with a high MSG1 repetition count, where the high MSG1 repetition count is a MSG1 repetition count that is higher than the current MSG1 repetition quantity, rolling back the current MSG1 repetition count.

In a possible implementation, the selecting a random access resource based on the post-rollback MSG1 repetition count and a feature other than the MSG1 repetition in current random access features includes:
selecting, from the first random access resource, a second random access resource that has a same feature or feature combination as the current random access resource, where
the second random access resource is a random access resource related to a next MSG1 repetition count that is higher than the current MSG1 repetition count, or the second random access resource is a random access resource related to a minimum MSG1 repetition count in the high MSG1 repetition count.

In a possible implementation, when there is one and only one first random access resource, the first random access resource is selected and a rollback to the MSG1 repetition count that is associated with the first random access resource is performed.

In a possible implementation, the determining, based on the MSG1 repetition and a feature other than the MSG1 repetition, whether to roll back the current MSG1 repetition count includes:
if there is a first random access resource that has a same feature or a same subset of a feature combination as the current random access resource, and a second random access resource selected from the first random access resource based on a feature priority is associated with a high MSG1 repetition count, rolling back the current MSG1 repetition count, where
the high MSG1 repetition count is a MSG1 repetition count that is higher than the current MSG1 repetition count, and in this case, the current MSG1 repetition count is rolled back; and
the same feature or the same subset of the feature combination includes the MSG1 repetition or a feature other than the MSG1 repetition.

In a possible implementation, the selecting a random access resource based on the post-rollback MSG1 repetition count and a feature other than the MSG1 repetition in current random access features includes:
selecting, from the second random access resource, a random access resource related to a next MSG1 repetition count that is higher than the current MSG1 repetition count, or selecting a random access resource related to a minimum MSG1 repetition count in the high MSG1 repetition count.

In a possible implementation, when there is one and only one second random access resource, the second random access resource is selected and a rollback to the MSG1 repetition count that is associated with the second random access resource is performed.

In a possible implementation, the same feature or feature combination includes the MSG1 repetition and the feature other than the MSG1 repetition in the current random access process.

The solutions provided in the embodiments of this application are described above mainly from a perspective of interaction between nodes. It may be understood that, to implement the foregoing functions, each node such as a terminal or a network device includes corresponding hardware structures and/or software modules for executing the functions. A person skilled in the art should easily be aware that, the example algorithm steps described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions for each specific application, but it should not be considered that the implementation goes beyond the scope this application.

In the embodiments of this application, the user equipment may be divided into functional modules based on the foregoing method examples. For example, each functional module may be obtained through division for a corresponding function, or two or more functions may be integrated into one processing module. The integrated module may be implemented in a form of hardware, or may be implemented in a form of a software functional module. It should be noted that division of the modules in the embodiments of this application is an example, and is merely logical function division. During actual implementation, there may be another division manner.

FIG. 14 is a structural diagram of a communication apparatus 1400. The communication apparatus 1400 may be a user equipment, a chip in the user equipment, or a system-on-a-chip. The communication apparatus 1400 may be configured to execute a function of the user equipment involved in the foregoing embodiments. In a possible implementation, the communication apparatus 1400 shown in FIG. 14 includes: a sending unit 1401 and a receiving unit 1402.

The sending unit 1001 is configured to initiate random access to a network side device.

The receiving unit 1402 is configured to receive configuration information and the like from the network side device.

Specifically, all related content of the steps in the foregoing method embodiments may be cited to function descriptions of the corresponding functional modules. Details are not described herein again.

In another possible implementation, the communication apparatus 1400 shown in FIG. 14 includes a processing module and a communication module. The processing module is configured to control and manage an action of the communication apparatus 1400. For example, the processing module may support the communication apparatus 1400 in executing a control function. The communication module may integrate functions of the sending unit 1401 and the receiving unit 1402, and may be configured to support the communication apparatus 1400 in performing steps in the method embodiments and communicating with another network entity, for example, communicating with a network side device. The communication apparatus 1400 may further include a storage module, configured to store program code and data of the communication apparatus 1400.

The processing module may be a processor or a controller. The processor may implement or execute various example logical blocks, modules, and circuits described with reference to content disclosed in this application. The processor may alternatively be a combination that implements a computing function, such as a combination of one or more microprocessors. The communication module may be a transceiver circuit, a communication interface, or the like. The storage module may be a memory.

An embodiment of this application further provides a computer-readable storage medium. All or some of the procedures in the foregoing method embodiments may be completed by a computer program instructing related hardware. The program may be stored in the foregoing computer-readable storage medium. When the program is executed, the procedures in the foregoing method embodiments may be included. The computer-readable storage medium may be an internal storage unit of a terminal including, for example, a data transmit end and/or a data receive end in any one of the foregoing embodiments, for example, a hard disk or a memory of the terminal. Alternatively, the computer-readable storage medium may be an external storage device of the terminal, for example, a plug-connected hard disk configured on the terminal, a smart media card (smart media card, SMC), a secure digital (secure digital, SD) card, or a flash card (flash card). Further, the computer-readable storage medium may further include both the internal storage unit of the terminal and the external storage device. The computer-readable storage medium is configured to store the computer program and another program and data required by the terminal. The computer-readable storage medium may be further configured to temporarily store data that has been outputted or that is to be outputted.

It should be noted that, the terms "first", "second", and the like in the specification, claims, and accompanying drawings of this application are used to distinguish between different objects, but are not used to describe a specific sequence. In addition, the terms "include" and "have" and any variations thereof are intended to cover a non-exclusive inclusion. For example, a process, method, system, product, or device that includes a series of steps or units is not limited to a listed step or unit, but optionally further includes an unlisted step or unit, or optionally further includes another step or unit inherent to the process, method, product, or device.

It should be understood that, in this application, "at least one" means one or more, "a plurality of' means two or more, "at least two" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between associated objects. "At least one of the following" or a similar expression thereof refers to any combination of these items, including one item or any combination of a plurality of items. For example, at least one of a, b, or c may represent a, b, c, "a and b", "a and c", "b and c", or "a, b, and c", where a, b, and c may be singular or plural.

It should be understood that, in this embodiment of this application, "B corresponding to A" indicates that B is associated with A. For example, B may be determined based on A. It should be further understood that determining B based on A does not mean determining B only based on A, and B may also be determined based on A and/or other information. In addition, "connected" in embodiments of this application refers to various connection manners such as a direct connection or an indirect connection, to implement communication between devices. This is not limited in embodiments of this application.

Unless otherwise specified, the term "transmission" (transmit/transmission) in embodiments of this application refers to two-way transmission, including transmitting and/or receiving actions. Specifically, "transmission" in the embodiments of this application includes sending data, receiving data, or sending data and receiving data. Alternatively, the data transmission herein includes uplink and/or downlink data transmission. The data may include a channel and/or a signal, the uplink data transmission is uplink channel transmission and/or uplink signal transmission, and the downlink data transmission is downlink channel transmission and/or downlink signal transmission. The terms "network" and "system" in the embodiments of this application express the same concept, and a communication system is a communication network.

Through the descriptions of the foregoing implementations, a person skilled in the art may clearly understand that for the purpose of convenient and brief description, only division into the foregoing functional modules is used as an example for description. In actual application, the functions may be allocated to and completed by different functional modules based on a requirement. In other words, an internal structure of the apparatus is divided into different functional modules, to complete all or some of the functions described above.

In the several embodiments provided in this application, it should be understood that the disclosed apparatus and method may be implemented in another manner. For example, the apparatus embodiments described above are merely examples. For example, division into modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units are integrated into one unit. The integrated unit may be implemented in the form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method in the embodiments of this application. The storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any change or replacement made within the technical scope disclosed in this application shall fall within the protection scope of this application. Therefore, the protection scope of this application shall be subject to the protection scope of the claims.

## Claims

1. A resource set selection method, wherein the method comprises:
when a MSG1 transmission count is greater than a first threshold, determining, based on MSG1 repetition, whether to roll back a current MSG1 repetition count; or when the MSG1 transmission count is greater than the first threshold, determining, based on the MSG1 repetition and a feature other than the MSG1 repetition, whether to roll back the current MSG1 repetition count; and
when it is determined to roll back the current MSG1 repetition count, selecting a random access resource based on the post-rollback MSG1 repetition count and a feature other than the MSG1 repetition in current random access features.

2. The method according to claim 1, wherein the MSG1 comprises a random access preamble, and the rollback comprises at least one of the following:
from a low coverage level to a high coverage level;
from a low MSG1 repetition count to a high MSG1 repetition count;
from the current MSG1 repetition count to a next MSG1 repetition count, wherein the next MSG1 repetition count is a minimum repetition count that is higher than the current MSG1 repetition count;
performing random access related to the high coverage level;
performing random access related to a next coverage level;
performing random access related to the next MSG1 repetition count; and
performing random access related to the high MSG1 repetition count, wherein the high MSG1 repetition count is a MSG1 repetition count that is higher than the current MSG1 repetition count.

3. The method according to claim 1 or 2, wherein
the first threshold corresponds to the MSG1 repetition count, and the first threshold is used to configure a maximum preamble transmission count that corresponds to the MSG1 repetition count.

4. The method according to any one of claims 1-3, wherein
the maximum preamble transmission count is a maximum preamble transmission count for the current Msg1 retransmission count before switching to a next available, high MSG1 retransmission count.

5. The method according to claim 1, wherein the determining, based on MSG1 repetition, whether to roll back a current MSG1 repetition count comprises:
if there is a random access resource related to a MSG1 repetition count that is higher than the current MSG1 repetition count, determining to roll back the current MSG1 repetition count.

6. The method according to claim 5, wherein the selecting a random access resource based on the post-rollback MSG1 repetition count and a feature other than the MSG1 repetition in current random access features comprises:
if there is a random access resource that has a same feature or feature combination as the current random access resource, and the random access resource is a random access resource related to a next MSG1 repetition count that is higher than the current MSG1 repetition count, selecting the random access resource.

7. The method according to claim 5, wherein the selecting a random access resource based on the post-rollback MSG1 repetition count and a feature other than the MSG1 repetition in current random access features comprises:
if there is a random access resource that has a same feature or a same subset of a feature combination as the current random access resource, selecting a random access resource based on a feature priority, wherein
the same feature or the same subset of the feature combination comprises the MSG1 repetition or the feature other than the MSG1 repetition.

8. The method according to claim 5, wherein the selecting a random access resource based on the post-rollback MSG1 repetition count and a feature other than the MSG1 repetition in current random access features comprises:
if there is no random access resource that has a same feature or feature combination as the current random access resource, selecting a random access resource related to a next MSG1 repetition count that is higher than the current MSG1 repetition count.

9. The method according to claim 1, wherein the determining, based on the MSG1 repetition and a feature other than the MSG1 repetition, whether to roll back the current MSG1 repetition count comprises:
if there is a first random access resource that has a same feature or feature combination as the current random access resource, and the first random access resource is associated with a high MSG1 repetition count, wherein the high MSG1 repetition count is a MSG1 repetition count that is higher than the current MSG1 repetition quantity, rolling back the current MSG1 repetition count.

10. The method according to claim 9, wherein the selecting a random access resource based on the post-rollback MSG1 repetition count and a feature other than the MSG1 repetition in current random access features comprises:
selecting, from the first random access resource, a second random access resource that has a same feature or feature combination as the current random access resource, wherein
the second random access resource is a random access resource related to a next MSG1 repetition count that is higher than the current MSG1 repetition count, or the second random access resource is a random access resource related to a minimum MSG1 repetition count in the high MSG1 repetition count.

11. The method according to claim 10, wherein
when there is one and only one first random access resource, the first random access resource is selected and a rollback to the MSG1 repetition count that is associated with the first random access resource is performed.

12. The method according to claim 1, wherein the determining, based on the MSG1 repetition and a feature other than the MSG1 repetition, whether to roll back the current MSG1 repetition count comprises:
if there is a first random access resource that has a same feature or a same subset of a feature combination as the current random access resource, and a second random access resource selected from the first random access resource based on a feature priority is associated with a high MSG1 repetition count, rolling back the current MSG1 repetition count, wherein
the high MSG1 repetition count is a MSG1 repetition count that is higher than the current MSG1 repetition count, and in this case, the current MSG1 repetition count is rolled back; and
the same feature or the same subset of the feature combination comprises the MSG1 repetition or a feature other than the MSG1 repetition.

13. The method according to claim 12, wherein the selecting a random access resource based on the post-rollback MSG1 repetition count and a feature other than the MSG1 repetition in current random access features comprises:
selecting, from the second random access resource, a random access resource related to a next MSG1 repetition count that is higher than the current MSG1 repetition count, or selecting a random access resource related to a minimum MSG1 repetition count in the high MSG1 repetition count.

14. The method according to claim 12, wherein
when there is one and only one second random access resource, the second random access resource is selected and a rollback to the MSG1 repetition count that is associated with the second random access resource is performed.

15. The method according to any one of claims 6-14, wherein
the same feature or feature combination comprises the MSG1 repetition and the feature other than the MSG1 repetition in the current random access process.

16. The resource set selection method according to claim 1, wherein the determining, based on MSG1 repetition, whether to roll back a current MSG1 repetition count comprises:
when there is a random access resource associated with a third feature, determining to roll back a first feature, wherein the first feature is the current MSG1 repetition count, and the third feature is the next repetition count that is higher than the current MSG1 repetition count.

17. The method according to claim 16, wherein the selecting a random access resource based on the post-rollback MSG1 repetition count and a feature other than the MSG1 repetition in current random access features comprises:
when there is a first random access resource that is associated with both the second feature and the third feature, selecting the first random access resource, wherein the second feature is a feature other than the MSG1 repetition in the current random access features.

18. The method according to claim 17, wherein the method further comprises:
when there is a random access resource that is associated with a subset of the second feature and the third feature, selecting a random access resource based on a feature priority.

19. The method according to claim 1, wherein the determining, based on the MSG1 repetition and a feature other than the MSG1 repetition, whether to roll back the current MSG1 repetition count comprises:
when there is a second random access resource that is associated with both a second feature and a subset of a fourth feature, determining to roll back the first feature, wherein the first feature is the current MSG1 repetition count, the second feature is a feature other than the MSG1 repetition count in the current random access features, and the fourth feature is a repetition count that is higher than the current MSG1 repetition count in a MSG1 repetition count configured by an access network device.

20. The method according to claim 19, wherein when there is only one second random access resource, after the determining to roll back the first feature, the method further comprises: rolling back the first feature to a fifth feature, wherein the fifth feature is a MSG1 repetition count associated with the second random access resource.

21. The method according to claim 19, wherein the selecting a random access resource based on the post-rollback MSG1 repetition count and a feature other than the MSG1 repetition count in current random access features comprises:
selecting a random access resource that is associated with both the second feature and the fifth feature.

22. The method according to claim 1, wherein the determining, based on the MSG1 repetition and a feature other than the MSG1 repetition, whether to roll back the current MSG1 repetition count comprises:
determining, through polling in ascending order of repetition counts in the fourth feature, whether there is a random access resource that is associated with the second feature and a MSG1 repetition count in the fourth feature, wherein the second feature is a feature other than the MSG1 repetition count in the current random access features, and the fourth feature is a repetition count that is higher than the current MSG1 repetition count in a MSG1 repetition count configured by an access network device; and
if there is a random access resource that is associated with the second feature and the MSG1 repetition count in the fourth feature, determining to roll back the first feature, wherein the first feature is the current MSG1 repetition count; or
if there is no random access resource that is associated with the second feature and the MSG1 repetition count in the fourth feature, determining not to perform a rollback.

23. The method according to claim 22, wherein the selecting a random access resource based on the post-rollback MSG1 repetition count and a feature other than the MSG1 repetition in current random access features comprises:
when the polling reaches a fifth feature in the fourth feature, determining that there is exactly a random access resource that is associated with the second feature and the fifth feature, and selecting the random access resource that is associated with the second feature and the fifth feature, wherein the fifth feature is a MSG1 repetition count with a lowest repetition count in the MSG1 repetition count that is associated with the second random access resource.

24. The method according to claim 23, wherein the method further comprises:
when there is no random access resource that is associated with both the second feature and a subset of the fourth feature, and a third random access resource selected based on a feature priority is associated with the subset of the fourth feature, determining to roll back the first feature.

25. The method according to claim 23, wherein when there are a plurality of third random access resources, after the determining to roll back the first feature, the method further comprises: rolling back the first feature to a sixth feature, wherein the sixth feature is a feature in the fourth feature, and the sixth feature is a MSG1 repetition count with a lowest repetition count in the MSG1 repetition count that is associated with the third random access resource.

26. The method according to claim 25, wherein the selecting a random access resource based on the post-rollback MSG1 repetition count and a feature other than the MSG1 repetition in current random access features comprises:
selecting a random access resource that is in the third random access resource and that is associated with the sixth feature.

27. A communication apparatus, wherein the communication apparatus comprises a processor and a communication interface, and the processor and the communication interface are configured to support the communication apparatus in performing the method according to any one of claims 1-26.

28. A computer-readable storage medium, wherein the computer-readable storage medium stores computer instructions, and when the computer instructions are run on a computer, the computer is enabled to perform the method according to any one of claims 1-26.

29. A computer program product, wherein the computer program product comprises computer instructions, and when the computer instructions are run on a computer, the computer is enabled to perform the method according to any one of claims 1-26.
